# FASCICULE DE BREVET EUROPEEN

(11) **EP 3 161 741 B1**
(45) Date de publication et mention de la délivrance du brevet: **18.04.2018**
(21) Numéro de dépôt: 15759826.9
(22) Date de dépôt: 25.06.2015
(51) Int. Cl.: G06Q 10/06, H04L 29/06

(54) **PROCÉDÉ DE SÉCURISATION DE BIENS IMMATÉRIELS DANS DES RÉSEAUX DE TÉLÉCOMMUNICATION.**
VERFAHREN ZUM SCHUTZ IMMATERIELLER VERMÖGENSWERTE IN TELEKOMMUNIKATIONSNETZEN
METHOD FOR PROTECTING INTANGIBLE ASSETS IN TELECOMMUNICATIONS NETWORKS

(30) Priorité: 26.06.2014 FR 1401429
(43) Date de publication de la demande: 03.05.2017
(73) Titulaire: Joffray, Olivier, 78810 Feucherolles (FR)
(72) Inventeur: Joffray, Olivier, 78810 Feucherolles (FR)
(74) Mandataire: den Braber, Gerard Paul
(86) Numéro de dépôt international: PCT/FR2015/000125
(87) Numéro de publication internationale: WO 2015/197925

(56) Documents cités:
- WO-A1-2005/001726
- US-A1- 2011 161 898
- SAM Y ET AL: "Web Services Customization: A Composition-based Approach", ICWE'06, 11 juillet 2006 (2006-07-11), - 14 juillet 2006 (2006-07-14), pages 25-31, XP040043456,

## Description

L'invention appartient au domaine technologique des dispositifs communiquant organisés en réseaux, elle comprend un procédé et un dispositif constitué de réseaux de télécommunication dans lequel des garanties sont apportées pour la sécurité des biens présents dans les réseaux, et les comportements des dispositifs communiquant qui constituent les réseaux.

Selon les cas, il est nécessaire de protéger les informations échangées, de garantir que certaines actions sont réalisées, et de s'assurer que d'autres actions ne sont réalisées que sous certaines conditions. Le procédé présenté dans cette invention utilise des dispositifs communiquant dont le comportement est connu et garanti. Un système expert calcul les paramètres à communiquer à ces dispositifs afin que les réseaux qu'ils constituent forment un ensemble dans lequel la sécurité des données et les actions visées sont mises en oeuvre. Les calculs utilisent les descriptions formelles des dispositifs communiquant et des objectifs à atteindre.

Il existe de nombreux cas de réseaux de communications qui nécessitent d'être sécurisés. Les réseaux informatiques d'entreprises, les réseaux Smart Grids de distribution d'énergie électrique comprenant des compteurs intelligents (compteurs Linky en France), les applications dans les téléphones mobiles intelligents (smartphone) et les tablettes, les communications entre les systèmes de paiement chez les commerçants et les banques, etc. L'invention s'applique à tous les réseaux de télécommunication constitués de dispositifs communiquant, quelles que soient leurs natures, à condition que les comportements desdits dispositifs et les objectifs de sécurité à atteindre puissent être décrits formellement. Le procédé mis en oeuvre selon l'invention calcul les paramètres des dispositifs, pour qu'ils se comportent individuellement de façon que les objectifs définis soient atteints.

Les produits industrialisés sont de plus en plus conçus selon des normes internationales qui permettent à des matériels issus de différentes sociétés de fonctionner ensemble. Cela s'applique en particulier pour les matériels qui communiquent entre eux. Par exemple, les réseaux informatiques, l'Internet, les appareils audio/vidéo avec les connexions HDMI, les réseaux industriels d'échanges et de supervision d'automates... Tous ces produits communiquant respectent des standards conçus pour adresser des fonctions multiples et répondre à des besoins variés. Les équipements des réseaux informatiques tels que les routeurs, les passerelles, les points d'accès WiFi, les cartes réseaux... sont des fonctions qui peuvent être implémentées dans des matériels spécialisés, ou dans les matériels versatiles qui embarquent plusieurs fonctions.

L'invention permet également d'attester que les objectifs sont atteints, y compris alors que les dispositifs communiquant qui constituent les réseaux sont éloignés.

Les caractéristiques opérationnelles des dispositifs communiquant, dont les paramètres sont calculés, sont connues, garanties et décrites formellement, en particulier les fonctions disponibles et leurs paramètres, ainsi que les résultats délivrés. Les réseaux constitués par les interconnexions entre ces dispositifs peuvent être publics, privés, confidentiels, etc. Très habituellement, les réseaux d'entreprises mettent des ressources à la disposition de leurs employés, et l'accès à ces ressources n'est pas possible depuis l'extérieur de l'entreprise, ou si le matériel connecté n'est pas reconnus sur le réseau. L'accès à certaines ressources peut également être réservé à certains personnels à l'intérieur d'une organisation, pour des raisons de confidentialité ou de coût (par exemple l'utilisation d'une imprimante couleur est souvent réservée à quelques personnes de l'entreprise).

Les moyens à mettre en oeuvre pour garantir le comportement d'un dispositif communiquant dépendent de l'objet lui-même et du niveau de garanti souhaité.
La sécurité embarquée dans les cartes à puce est souvent vérifiée par un organisme indépendant avant que les cartes soient distribuées. C'est notamment le cas des cartes bancaires Françaises, des passeports électroniques (qui embarquent un composant électronique de carte à puce), des cartes d'identité à puce. Cette vérification est fréquemment réalisée, selon les Critère Communs d'évaluation des technologies de l'information (voir : http://www.ssi.gouv.fr/fr/certification-qualification/cc/ ou http://www.commoncriteriaportal.org/). La vérification de la sécurité d'une carte à puce est très exigeante en raison de l'importance des données que la carte manipule (identité des individus, moyen de paiement électronique...).
La vérification concrète du comportement d'un dispositif communiquant par un organisme indépendant n'est pas systématique. Lorsque le but est de garantir un niveau concret de sécurité informatique pour se protéger face à des risques identifiés, il est préférable de vérifier que chaque dispositif communiquant a les caractéristiques qui lui permettent de résister aux risques qu'il encoure. Lorsque le but est d'obtenir un engagement sur les fonctions délivrées par un dispositif communiquant, tel que le stockage de données accompagné d'un accusé réception à chaque utilisation du service, un contrat commercial entre les parties accompagné de la description formelle des fonctions délivrées par le dispositif communiquant suffisent.

Les dispositifs sont paramétrés pour que leurs fonctionnements correspondent aux objectifs fixés. Plus un produit est versatile, plus ces paramétrages sont complexes. Lorsqu'il s'agit de paramétrer des matériels différents, provenant de sources différentes et avec des fonctions variées, la tâche peut s'avérer ardue, et être à la source de disfonctionnements ou de failles de sécurité, notamment quand il s'agit de matériels pour les réseaux informatiques. Le sujet est d'autant plus difficile à adresser que ces réseaux évoluent très fréquemment, à l'occasion de l'ajout ou de la suppression d'utilisateurs, de réunions où des invités se connectent aux réseaux, lors du renouvèlement d'un matériel (exemple : un PC), lors de la mise à jour des logiciels, ou lors du remplacement d'un point d'interconnexion pour faire face à une augmentation du volume de transaction à traiter (exemple : mise en place d'un nouveau routeur pour faire face à l'arrivée de cinquante personnes supplémentaires sur un site).

L'invention est applicable au traitement des données informatiques dans les grandes entreprises, comme pour le traitement des données à caractère personnel qui est très réglementé en France et en Europe. Le document « COM(2012) 11 final - 2012/0011 (COD) » est une proposition de règlement du parlement européen et du conseil relatif à la protection des personnes physiques à l'égard du traitement des données à caractère personnel et à la libre circulation de ces données (règlement général sur la protection des données). Ce règlement a pour objectif de protéger les libertés et les droits fondamentaux des personnes physiques. Il établie des règles à respecter lors du traitement automatisé de données à caractère personnel. Les exigences présentées dans cette proposition de règlement sont multiples, compliquées, source de complexité dans les interactions entre les entreprises et les individus, et entre les entreprises elles-mêmes. À partir de la description formelle des objectifs techniques à atteindre pour se conformer à un tel règlement, l'invention calcul les paramètres nécessaires pour les atteindre.
Lorsque les objectifs à atteindre comprennent des actions à réaliser, telle que la suppression de données, l'invention calcul les paramètres des dispositifs certifiés pour qu'ils calculent et délivrent un sceau qui atteste que l'action a bien été réalisée.

L'invention s'applique également pour les systèmes et processus critiques et qui sont conçus pour qu'ils ne tombent jamais en panne, tels que les systèmes informatiques en services dans les avions ou dans les centrales nucléaires. En raison de leurs tailles et de leurs complexités, il est difficile et couteux de mettre au point et de garantir ces systèmes. En revanche, il est plus simple de concevoir, de vérifier et de garantir le comportement de dispositifs plus petits, qui communiquent entre eux. Organisés en réseaux, et paramétrés avec des valeurs calculées grâce à l'invention, ces dispositifs communiquant atteignent les même objectifs, mais à moindre coût.

La description d'un système d'information et de ses utilisateurs peut utiliser des expressions impératives ou des expressions déclaratives.
L'utilisation d'expressions impératives consiste à décrire opérationnellement le système, c'est-à-dire comment on réalise, étape par étape, les fonctions qu'il apporte. Les langages de programmation tels que le C ou le Java sont constitués d'expressions impératives.
L'utilisation d'expressions déclaratives consiste à décrire ce qui est attendu du système sans faire référence à la méthode qui permettra la mise en oeuvre.
Le procédé décrit dans cette invention fonctionne avec les deux modes de description.

### ART ANTÉRIEUR

WO 2005/001726 décrit une approche pour transformer automatiquement une offre de fournisseur, qui décrit en termes commerciaux un environnement de services informatiques, dans un formulaire lisible et exécutable par machine, le formulaire pouvant être automatiquement traité par des systèmes de gestion de ressources informatiques. US 2011/161898 décrit un exemple d'outil formel de vérification pour prouver ou réfuter qu'une conception d'un dispositif électronique est conforme a une spécification.

La sécurisation des systèmes d'informations est un sujet qui est adressé avec des approches variées, qui dépendent du type de système d'information et des menaces auxquels il faut faire face.

Un dispositif portable tel qu'une carte à puce bancaire n'est pas soumis aux mêmes menaces que le système d'information d'un hôpital où sont stockés les dossiers médicaux des patients.

Le brevet numéro "US 8,010,333 B2" intitulé "Processing for developing and implementing a model for the formal description of a collaborative system comprised of multiple distributed components, especially an intelligent, flexible production and/or process automation system", présente un processus simplifiant le développement et l'implémentation d'un modèle formel décrivant un ensemble collaboratif de multiples composants distribuées. Il décrit la modélisation de composants, ainsi que les interfaces qui leurs permettent de communiquer entre eux, afin de calculer et d'implémenter un modèle décrivant un système réel de production comprenant des processus d'automatisation. Il décrit également l'identification et la modélisation des caractéristiques des composants dans un catalogue utilisé pour construire le modèle. La modélisation réalisée consiste en un réseau de Petri de haut niveau ("High-Level-Petri-Net"). L'invention reprend les principes généraux que sont la modélisation individuelle des composants (y compris de leurs interfaces de communication), le catalogage de ces composants et de leurs caractéristiques, ainsi que la modélisation et le catalogage de règles mais dans un but différent et selon un procédé différent.

Les quatre propriétés de sécurité suivantes permettent de définir les protections d'un bien :
1. Le contrôle d'accès.
2. La confidentialité.
3. L'intégrité.
4. L'authenticité.

Les règles d'un contrôle d'accès sont définies selon les utilisateurs de l'élément. En interdisant à des utilisateurs non autorisés d'accéder à un élément, le contrôle d'accès assure la confidentialité, l'intégrité et l'authenticité du bien ; la qualité de la protection dépend des caractéristiques du conteneur de l'élément.
L'accès à une donnée informatique peut être limité en définissant des règles sur la données directement (exemple : ficher en lecture libre pour tous, écriture réservée au créateur du fichier). On peut aussi limiter l'accès à la donnée en contrôlant l'accès au support physique sur lequel elle est stockée (exemple : pour accéder à un fichier stocké uniquement sur une clé USB, il faut accéder à la clé USB).
Lorsqu'une donnée est stockée sur une simple mémoire telle qu'une clé USB, elle est moins bien protégée que si elle stockée sur une carte à puce sécurisée ; dans le premier cas il suffit de détenir le support pour accéder à la donnée alors que dans le second l'accès à ladite donnée est contrôlé par la carte qui ne l'autorise que sous certaines conditions.

La confidentialité est assurée lorsque l'élément protégé ne peut être copié ou dérobé. Les données échangées sur les réseaux sont protégées en confidentialité lorsque la récupération des informations qui circulent ne permet pas d'obtenir l'élément protégé (par exemple lorsqu'il est chiffré pendant les communications).

L'intégrité est assurée lorsque l'élément ne peut être modifié, elle dépend exclusivement du support où l'élément est stocké.
Une carte à puce assure l'intégrité d'une donnée lorsqu'elle est programmée pour refuser sa modification. L'intégrité d'une donnée échangée sur un réseau ne peut être assurée car elle peut avoir été altérée pendant le transfert. Lorsqu'elle est réceptionnée, son intégrité est contrôlée à l'aide d'une information qui l'accompagne (exemple : code de redondance cyclique), mais il n'existe pas de moyen pour garantir qu'une donnée échangée sur un réseau conservera son intégrité.
Lorsque l'intégrité d'un élément transmis sur les réseaux est assurée, cela signifie que le destinataire a contrôlé l'intégrité lors de la réception et qu'il dispose d'un élément conforme à celui qui a été émis.

L'authenticité d'un élément est assurée lorsqu'une modification interdite est détectée avant qu'il soit utilisé, donc avant qu'un problème n'ait lieu.

Lorsqu'il s'agit de protéger un élément, les propriétés à garantir peuvent être assurées sur l'élément directement, ou elles peuvent être héritées de l'environnement où il est utilisé.
Par exemple, lorsque le porteur d'une carte à puce saisi son code secret, il s'authentifie auprès de la carte. Quand la carte délivre un élément accessible sous condition d'authentification de son porteur, le lecteur où elle est insérée hérite de la propriété « porteur de la carte authentifié ». C'est ce qui se passe avec les cartes SIM dans les téléphones portables ; la carte ne délivre le cryptogramme qui libère l'accès au réseau de télécommunication que si le code PIN du porteur lui a été présenté.
Cette propriété permet de prouver la sécurité de bout en bout.

Les moyens utilisés pour mettre en oeuvre les quatre propriétés de sécurité dépendent de l'élément qu'il faut protéger et des technologies disponibles, parmi lesquelles la cryptographie est particulièrement adaptée.
La confidentialité est assurée en chiffrant et en déchiffrant les données.
Pour vérifier l'intégrité des données échangées, elles sont transmises accompagnées d'un cryptogramme unique qui sera vérifié par le destinataire.
L'authenticité est établie lorsque le cryptogramme qui accompagne le bien est vérifiable à l'aide d'une clé que seuls les participants à l'échange peuvent connaître. La cryptographie symétrique à clés secrètes est adaptée si la non-répudiation n'est pas requise (tous les participants connaissent la clé secrète et sont en mesure de calculer ou de vérifier le cryptogramme d'authentification). Sinon, la signature électronique et la cryptographie asymétrique à clés publiques sont utilisées (seul le signataire connait la clé privée).
Le contrôle d'accès utilise la cryptographie pour autoriser ou rejeter les demandes d'accès. Le schéma d'authentification challenge/réponse est un exemple classique de ce qui est utilisé.

Tout comme les automobiles les plus sûres disposent d'un certificat Euro NCAP, les matériels informatiques peuvent être évalués et certifiés. La méthode reconnue internationalement pour évaluer les technologies de l'information s'appelle : « Critère Communs d'évaluation des technologies de l'information ». Elle est présentée sur les sites internet suivants :
- http://www.ssi.gouv.fr/fr/certification-qualification/cc/
- http://www.commoncriteriaportal.org/
Il existe d'autres schémas d'évaluation qui s'appliquent pays par pays (exemple : le schéma CSPN pour la France), ou des schémas privés qui sont conçus pour un usage spécifique (exemple : les schémas EMVCO, VCSP ou CAST définis pour adresser la sécurité du paiement électronique). Les schémas d'évaluations permettent d'évaluer un matériel dans un contexte et une configuration identifiée. À l'issue d'une évaluation réussie, un certificat qui garantit que l'objet soumis à l'évaluation est conforme aux attentes est émis par l'autorité responsable du schéma d'évaluation.

Le Référentiel Général de Sécurité (RGS) est un ensemble de documents émis par l'Agence Nationale de Sécurité des Systèmes d'Information (ANSSI) en France.
Ces documents décrivent des règles pour la mise en oeuvre de la sécurité dans les systèmes d'information. Ce ne sont pas des spécifications techniques car les documents n'imposent pas la méthode pour mettre en oeuvre la sécurité, mais ils indiquent ce qui est attendu d'un système pour qu'il soit conforme au RGS.

L'application IAS-ECC est un moteur cryptographique générique et paramétrable. Plusieurs versions de cette application ont été évaluées et certifiées selon le schéma des critères communs. L'art antérieur constitué par cette spécification est intéressant pour une mise en oeuvre préférentielle de cette invention, en particulier son architecture orientée objet appliquée à la gestion des droits d'accès.
L'application IAS-ECC définie plusieurs types d'objets SDO qui proposent différents services. En voici quatre:
- PIN (code secret) :
   ∘ Il permet d'authentifier un utilisateur en vérifiant son PIN.
   ∘ Il est possible de changer ou de débloquer un PIN.
- Paire de clés symétriques (cryptographie à clés secrètes) :
   ∘ Il permet d'établir un canal de communication protégé en confidentialité et en intégrité après avoir réalisé une authentification mutuelle.
- Clé asymétrique publique (cryptographie à clés publiques) :
   ∘ Il permet de vérifier l'authenticité des signatures électroniques, notamment les signatures des certificats des clés publiques qui sont utilisées dans les architectures PKI (infrastructure à clé publiques); il permet aussi de chiffrer des messages afin d'en assurer la confidentialité.
- Clé asymétrique privée (cryptographie à clés publiques) :
   ∘ Il permet de calculer des signatures électroniques authentiques, ou de déchiffrer des messages.
Chaque type de SDO désigne un objet qui propose des services selon son type. Lorsqu'il est instancié, un SDO est personnalisé avec des paramètres qui définissent notamment :
- Les conditions pour obtenir le droit d'utiliser un service, ou pour mettre à jour un objet.
- Les conditions d'utilisation des services, notamment la longueur de la clé (ou du PIN), l'algorithme avec lequel elle peut être utilisée, le mode d'utilisation, etc. ce qui permet d'assurer qu'un objet sera systématiquement utilisé comme attendu.
- Les informations supplémentaires utiles à des fins de gestions.
La technique des SDO permet une grande versatilité dans la définition des conditions d'utilisations des services.
Considérons le cas où on souhaite utiliser un service S1 sur un objet SDO1. Lorsqu'une de ces propriétés de base est requise, la condition d'utilisation du service S1 pointe vers un autre objet SDO2 qui propose le service S2 permettant de mettre en oeuvre les conditions assurant la propriété attendue pour obtenir le droit d'utiliser S1. Si le service S2 n'est pas libre d'usage, la condition d'utilisation pointe vers un ou plusieurs autres services S3, S4, ... Sn proposés par d'autres SDO. Une procédure récursive permet de parcourir tous les SDO pointés jusqu'à trouver le/les service(s) libre(s) d'accès qui libéreront l'usage des services des SDO précédemment parcourus, et ainsi remonter jusqu'au service S1 dont l'accès se trouvera alors autorisé.
Il n'y a pas de limite logique aux combinaisons imaginables pour définir les conditions d'accès aux services d'un SDO. C'est le nombre maximal de SDO que l'application peut contenir qui détermine la limite. Les spécifications de cette application et de son environnement de fonctionnement sont décrites à l'adresse Internet suivante : http://www.ants.interieur.gouv.fr/ias/IAS.html

La forme de Backus-Naur (souvent abrégée en BNF, de l'anglais Backus-Naur Form) est une notation permettant de décrire les règles syntaxiques des langages de programmation. C'est donc un métalangage. Elle est utilisée dans certains livres pour décrire le langage étudié, mais également par de nombreux logiciels d'analyse syntaxique pour travailler sur des fichiers sources de plusieurs langages différents. Elle est une notation pour des grammaires formelles de type hors-contexte (car on définit les termes hors de leur contexte, pour replacer ensuite la définition desdits termes dans ce contexte).

Les méthodes de vérification formelles sont des techniques permettant de raisonner rigoureusement, à l'aide de logique mathématique. Elles peuvent s'appliquer sur des programmes informatiques ou des matériels électroniques afin de démontrer leur validité par rapport à une spécification. Les méthodes formelles sont basées sur les sémantiques des programmes c'est-à-dire sur les descriptions formelles du comportement du programme obtenu depuis son code source, ou depuis son code objet lorsque la transformation du code source vers le code objet n'a pas altéré lesdites descriptions.

Les méthodes formelles peuvent être utilisées pour donner une spécification du système que l'on souhaite développer, au niveau de détails désiré. Une spécification formelle du système est basée sur un langage formel dont la sémantique est bien définie (contrairement à une spécification en langage naturel qui peut donner lieu à différentes interprétations). Cette description formelle du système peut être utilisée comme référence pendant le développement. De plus, elle peut être utilisée pour vérifier (formellement) que la réalisation finale du système (décrite dans un langage informatique dédié) respecte les attentes initiales (notamment en termes de fonctionnalité). La nécessité des méthodes formelles s'est fait sentir depuis longtemps. Dans le rapport Algol 60, John Backus présentait une notation formelle pour décrire la syntaxe des langages de programmation (notation appelée Backus-Naur form, BNF).
Il existe plusieurs laboratoires dans le monde qui étudient les méthodes formelles. Il existe également plusieurs langages et plusieurs outils pour les mettre en oeuvre. Par exemple, l'outil COQ développé à l'INRIA (INRIA : Institut National de Recherche en Informatique et en Automatique - voir http://cog.inria.fr/) est fréquemment utilisé lors des certifications Critères Communs réalisées sous l'égide de l'ANSSI (ANSSI : Agence National de la Sécurité des Systèmes d'Information). En particulier, COQ est utilisé pour s'assurer qu'un modèle formel satisfait les règles décrites dans une spécification de référence en procédant à des vérifications algorithmiques ("model checking"), lesdites règles étant elles-mêmes exprimées formellement. Le « Software Design Group » du MIT ("Massachusetts Institute of Technology") a développé la suite logicielle « Alloy » (voir http://alloy.mit.edu) qui est constitués d'un langage de description de structures et d'un outil pour les explorer. Alloy a été spécifiquement développé pour adresser une forme allégée des méthodes formelles.

Les méthodes formelles permettent d'obtenir une forte assurance quant au comportement d'un programme informatique conçu dans un but précis grâce à l'utilisation des assistants de preuves. Un assistant de preuve est un logiciel permettant l'écriture et la vérification de preuves mathématiques, notamment sur des assertions relatives à l'exécution de programmes informatiques. Cette méthode est particulièrement adaptée pour les problèmes difficiles à résoudre à l'aide des autres outils proposés par les méthodes formelles.

Un système-expert est un outil informatique conçu pour simuler le savoir-faire d'un spécialiste dans un domaine précis et délimité. Il opère en exploitant des connaissances fournies explicitement par des experts du domaine. Il permet de modéliser le raisonnement d'un expert, de manipuler des connaissances sous une forme déclarative, d'en faciliter l'acquisition, la modification et la mise à jour et de produire des explications sur la façon dont sont obtenus les résultats d'une expertise.

### OBJECTIFS ET RÉSUMÉ DE L'INVENTION

L'invention apporte des garanties fortes sur la sécurité des biens utilisés dans les réseaux et sur le comportement des matériels et des logiciels connectés en réseaux, en calculant les paramètres qui programment leurs comportements opérationnels selon des objectifs à atteindre. Les dispositifs connectés aux réseaux délivrent des sceaux qui attestent des fonctions qu'ils mettent en oeuvre afin de prouver que les objectifs visés sont atteints.
Pour protéger un bien, il est possible d'en limiter l'accès, d'en assurer la confidentialité, l'intégrité et l'authenticité. Un bien peut-être une donnée ou une ressource telle qu'une fonction ou un droit d'utilisation.
Pour prouver un fait, les dispositifs communiquant certifiés qui interviennent dans sa réalisation délivrent des éléments de preuve correspondants aux opérations qu'ils effectuent. Un élément qui prouve la réalisation d'une fonction peut être de deux natures :
1. Soit c'est une donnée vérifiable par le demandeur de la preuve, telle qu'une signature électronique transmise au travers des réseaux de communications et qui peut, comme n'importe quel autre bien, être protégée selon des objectifs.
2. Soit c'est un signal compréhensible par un utilisateur, un appareil ou un dispositif communiquant, tel que l'éclairage d'une diode lumineuse sur un appareil pour informer un utilisateur, ou l'activation d'un relais qui ferme ou ouvre un circuit.
Les comportements des matériels et logiciels qui constituent les réseaux sont décrits et garantis pour pouvoir garantir que les objectifs sont atteints. Ces descriptions formelles peuvent être constituées d'expressions impératives et d'expressions déclaratives.

L'invention permet de calculer les paramètres qui garantissent fortement que les objectifs définis par les responsables des réseaux sont atteints.
Les modèles des dispositifs communiquant qui participent aux réseaux et les modèles des objectifs à atteindre sont utilisés pour calculer les paramètres qui conviennent. Les calculs sont réalisés à l'aide d'un système expert qui utilise les descriptions formelles des réseaux, de leurs composants et des objectifs visés, et qui calcule les paramètres à transmettre aux dispositifs communiquant, afin qu'ils se comportent selon les objectifs.

### DESCRIPTIONS DES ILLUSTRATIONS

D'autres objectifs, fonctions et avantages distinctifs de l'invention apparaîtront à la lecture de la description du mode de réalisation préférentiel, qui constitue un exemple non-limitatif se référant aux figures ci-jointes dans lesquelles :
- la figure 1 présente une organisation logique d'un bien à protéger (AST) qui peut être une donnée (DATA) sur laquelle une action (ACT) peut être appliquée, ou qui peut être une ressources (RSRC) dont on peut faire l'utilisation (USE) ;
- la figure 2 présente les organisations logiques :
   ∘ d'une activité (ACTVT) comportant quatre biens à protéger (AST1, AST2, AST3, AST4),
   ∘ d'une protection (PROTECT) qui comprend quatre propriétés de sécurité : contrôle d'accès (P1), confidentialité (P2), intégrité (P3), authenticité (P4) ;
   ∘ d'une condition d'utilisation (CDT) qui implique une activité (ACTVT) selon une protection (PROTECT),

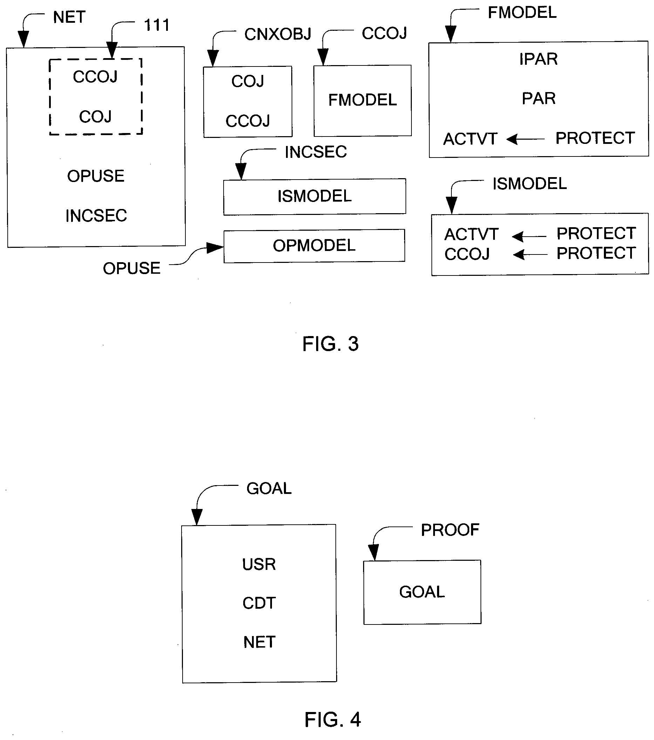

- la figure 3 présente les organisations logiques :
   ∘ d'un dispositif communiquant certifié (CCOJ) dont le comportement connu et garanti est décrit formellement dans un modèle formel (FMODEL),
   ∘ du modèle formel (FMODEL) d'un dispositif communiquant certifié (CCOJ), qui comprend des paramètres initiaux (IPAR), des paramètres calculés (PAR) et des activités (ACTVT), auxquelles ledit dispositif apporte des protections (PROTECT) en fonction de ses paramètres,
   ∘ de propriétés de sécurité (INCSEC) décrites formellement dans un modèle (ISMODEL), et qui s'appliquent inconditionnellement,
   ∘ du modèle formel (ISMODEL) pour des propriétés de sécurité (INCSEC), qui décrit une pluralité de protections (PROTECT) dont bénéficient une pluralité d'activités (ACTVT), et une pluralité de protections (PROTECT) dont bénéficient une pluralité de dispositifs communiquant certifiés (CCOJ).
   ∘ d'un objet communiquant (CNXOBJ), qui comprend une pluralité de dispositifs communiquant certifiés (CCOJ), et une pluralité de dispositifs communiquant quelconques (COJ),
   ∘ des contraintes opérationnelles (OPUSE) qui sont décrites formellement dans un modèle formel (OPMODEL),
   ∘ d'un réseau (NET) qui comprend une pluralité de dispositifs communiquant certifiés (CCOJ) ou quelconques (COJ), dans lequel s'appliquent des contraintes opérationnelles (OPUSE) et des propriétés de sécurité (INCSEC).
- La figure 4 présente l'organisation logique d'un objectif (GOAL), et d'une preuve (PROOF), choisies par le responsable réseau (NM), dans laquelle :
   ∘ un objectif (GOAL) comprend une pluralité de réseaux (NET), une pluralité d'utilisateurs (USR), et une pluralité de conditions d'utilisation (CDT),
   ∘ une preuve (PROOF) comprenant la référence d'un objectif (GOAL) pour lequel le responsable réseau (NM) demande une attestation.

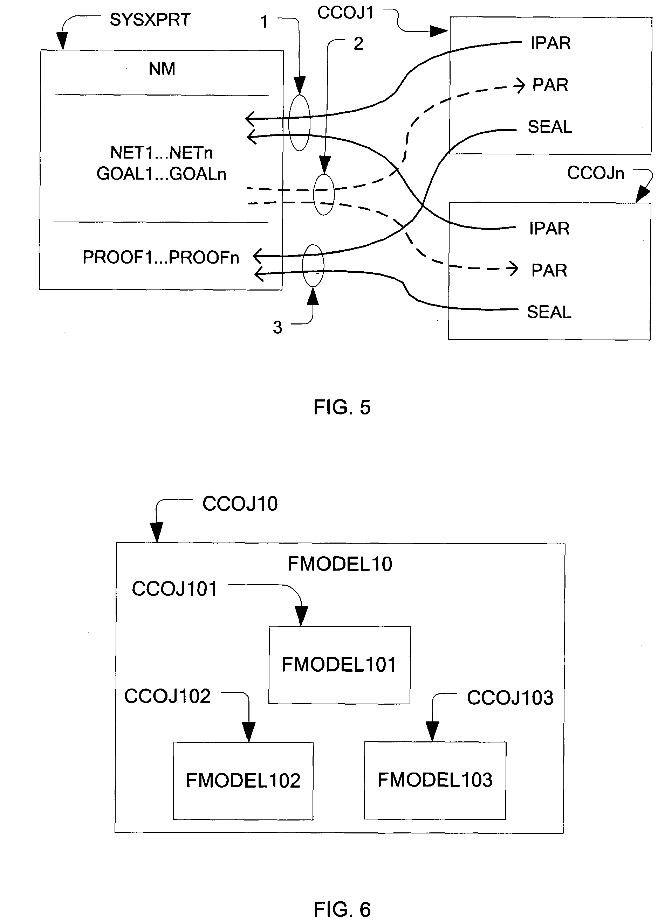

- La figure 5 est une vue schématique des échanges entre les dispositifs communiquant certifiés (CCOJ1 à CCOJn) et un système expert (SYSXPRT) dans laquelle :
   ∘ les paramètres initiaux (IPAR) des dispositifs communiquant certifiés sont communiqués (1) au système expert,
   ∘ les paramètres (PAR) calculés par le système expert sont communiqués (2) aux dispositifs communiquant certifiés,
   ∘ les dispositifs communiquant certifiés communiquent (3) des sceaux (SEAL) au système expert.
- La figure 6 présente l'organisation logique d'un dispositif communiquant certifié (CCOJ10) dans lequel sont encapsulés trois d'autres dispositifs communiquant certifiés (CCOJ101, CCOJ102, CCOJ103).

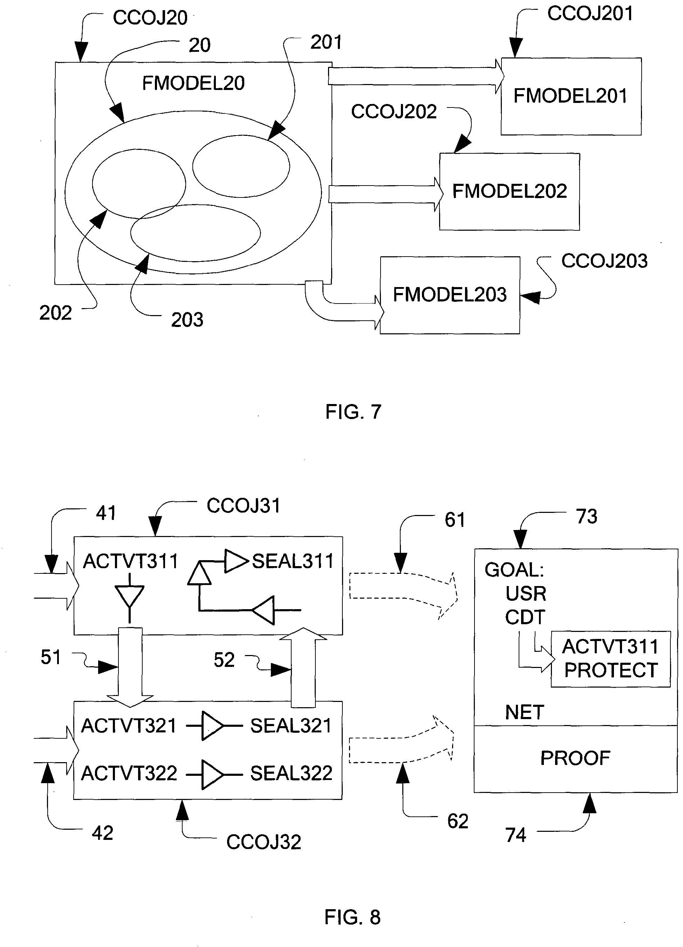

- La figure 7 est une vue schématique d'un dispositif communiquant certifié (CCOJ20) dont les fonctions (20, 201, 202, 203) sont utilisées pour le présenter selon trois autres dispositifs communiquant certifiés (CCOJ201, CCOJ202, CCOJ203).
- La figure 8 est une vue schématique de deux dispositifs communiquant certifiés (CCOJ31, CCOJ32) dont les activités (ACTVT311, ACTVT321, ACTVT322) sont utilisées en combinaisons, pour atteindre un objectif (73) et apporter une preuve (74).

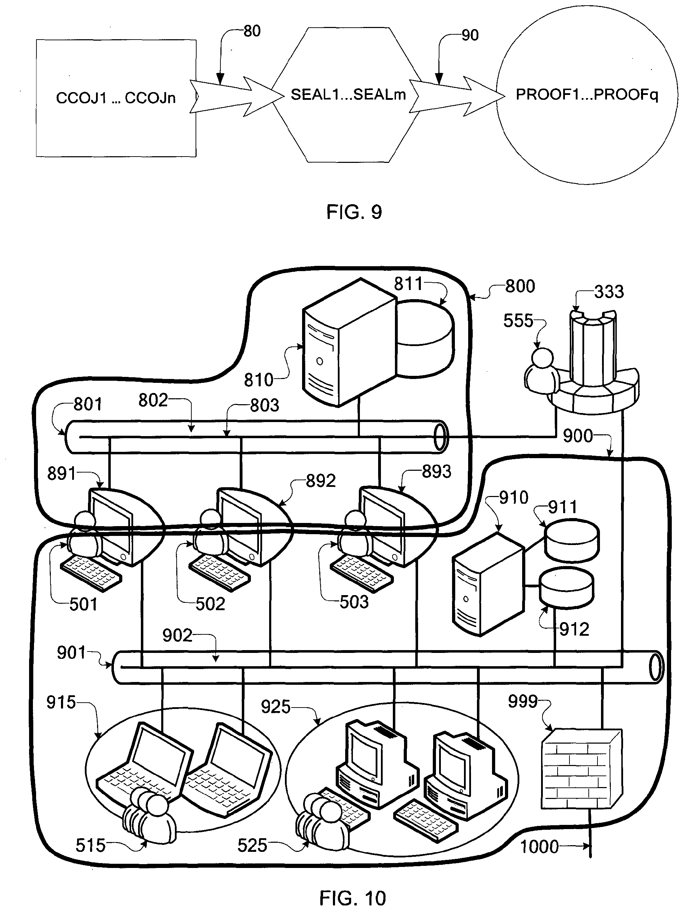

- La figure 9 est une vue schématique d'une pluralité de dispositifs communiquant certifiés (CCOJ1...CCOJn), qui délivrent une pluralité de sceaux (SEAL1...SEALm), pour constituer les preuves (PROOF1... PROOFq).
- La figure 10 est une vue schématique d'un réseau informatique local.

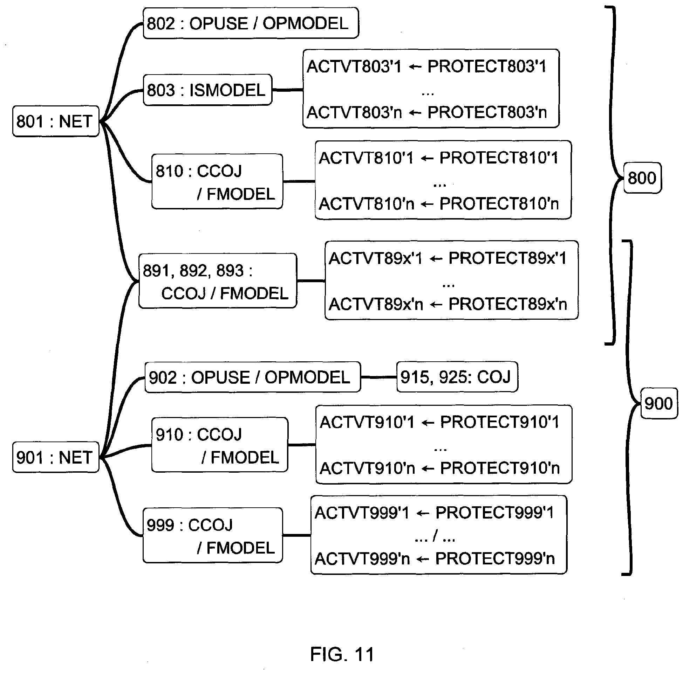

- La figure 11 présente l'organisation logique des descriptions formelles d'un réseau informatique local.

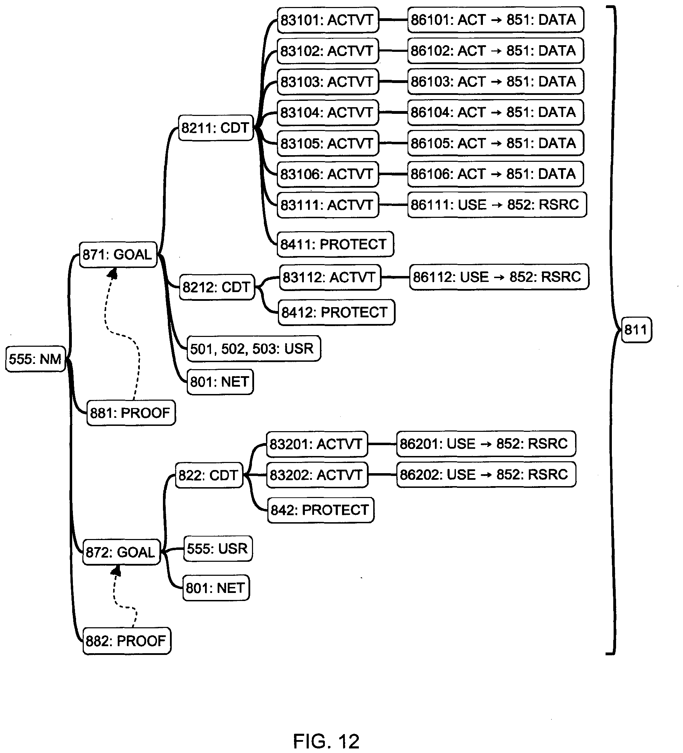

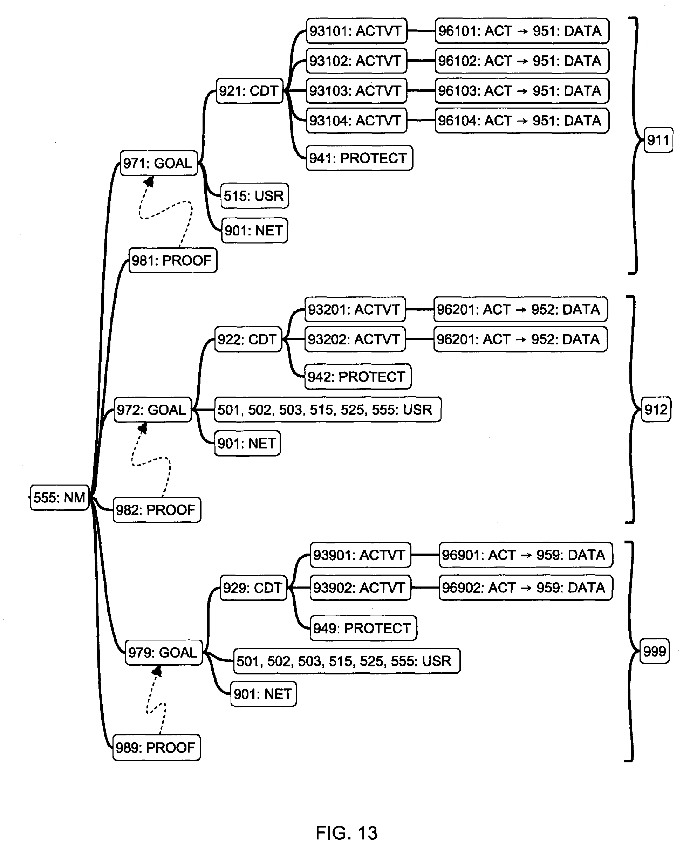

- La figure 12 et la figure 13 présentent l'organisation logique des descriptions formelles des objectifs et des preuves, d'un exemple d'utilisation de l'invention.

### MODE DE RÉALISATION PRÉFÉRENTIEL

Un responsable réseau est le représentant d'une organisation qui à la responsabilité d'assurer la sécurité et le fonctionnement des réseaux dans lesquels des matériels et des logiciels communiquent. Dans toute la suite de la description, le terme NM sera entendu comme un responsable réseau qui utilise l'invention pour obtenir des fortes garanties et atteindre des objectifs dans les réseaux.

Les objectifs (fig. 4, GOAL) de sécurité sont différents en fonction des utilisateurs (fig. 4, USR) des réseaux. Dans toute la suite de la description, le terme USR sera entendu comme un utilisateur identifié, ou un groupe d'utilisateurs identifiés, qu'il s'agisse d'une personne physique, d'une personne morale, ou d'un dispositif communiquant certifié qui utilise automatiquement les services d'autres dispositifs communiquant pour exécuter les fonctions pour lesquelles il a été conçu et paramétré.

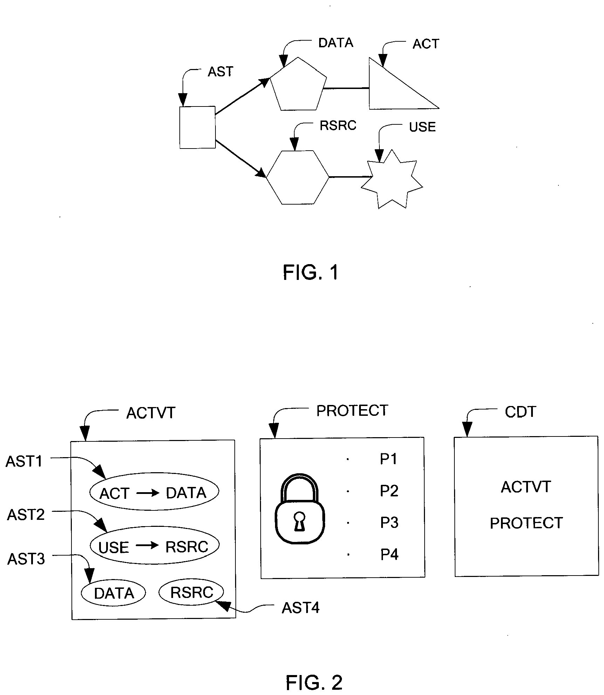

Selon une mise en oeuvre de l'invention, la figure 1 présente l'organisation logique d'un bien à protéger (fig. 1, AST) qui peut être une donnée (fig. 1, DATA) sur laquelle une action (fig. 1, ACT) peut s'appliquer, ou qui peut être une ressource (fig. 1, RSRC) qui peut être utilisée (fig.1, USE).
Dans toute la suite de la description, le terme DATA sera entendu comme une ou plusieurs données, et le terme RSRC sera entendu comme une ou plusieurs ressources.
Dans toute la suite de la description, le terme ACT sera entendu comme une ou plusieurs actions qui peuvent s'appliquer sur une donnée DATA, et le terme USE sera entendu comme une ou plusieurs utilisations d'une ressource RSRC.
Dans toute la suite de la description, le terme AST sera entendu indifféremment comme une donnée DATA ou une ressource RSRC.

Selon une mise en oeuvre de l'invention, la figure 2 présente l'organisation logique d'une activité (fig. 2, ACTVT) mise en oeuvre par les dispositifs communiquant certifiés qui est :
- soit une action ACT appliquée sur une donnée DATA (fig. 2, AST1),
- soit l'utilisation USE d'une ressource RSRC (fig. 2, AST2),
- soit une donnée DATA sans action ACT associée (fig. 2, AST3),
- soit une ressource RSRC sans utilisation USE associée (fig. 2, AST4)

Les dispositifs communiquant certifiés comprennent des activités (ACTVT) dont le fonctionnement change selon leurs paramétrages. Par exemple une activité permettant d'accéder à un système de fichier peut proposer toutes les fonctions du système de fichier (cas n° 1 : lecture, effacement, exécution, création de fichier ou de répertoires, etc.) ou être paramétrée pour offrir des fonctions limitées (cas n°2 : lecture et exécution uniquement, par exemple).

Utilement, le responsable réseau déterminera les fonctions dont il a l'usage, en indiquant les configurations selon lesquelles il utilisera les activités (ACTVT) des dispositifs communiquant certifiés. Une activité (ACTVT) dont le comportement opérationnel peut être modifié par son paramétrage est utilisée pour engendrer d'autres activités (ACTVT) ; par exemple, une activité pour accéder à un système de fichier dont on paramètre deux usages différents engendre deux activités (ACTVT) séparée (une pour chaque usage).

Dans toute la suite de la description, le terme ACTVT sera entendu indifféremment :
- comme la description formelle d'une donnée DATA et d'une action ACT associée,
- comme la description formelle d'une ressource RSRC et d'une utilisation USE associée,
- comme la description formelle d'une donnée DATA seule ou d'une ressource RSRC seule.
Une activité ACTVT est l'association d'une action ACT sur une donnée DATA, ou l'utilisation USE d'une ressource RSRC ; ainsi une même ressource RSRC, ou une même donnée DATA, peut apparaître dans plusieurs activités ACTVT lorsque l'utilisation USE, ou l'action ACT, associée est différente.

Selon une mise en oeuvre de l'invention, la figure 2 présente l'organisation logique des protections (fig. 2, PROTECT) utilisées pour décrire les protections attendues, ou pour décrire les protections apportées par les réseaux et leurs constituants.
Dans toute la suite de la description, le terme PROTECT sera entendu comme la description formelle des propriétés de sécurité qui peuvent être apportées ou réclamées pour exécuter une activité ACTVT.
Une protection PROTECT comprend de une à quatre propriétés de sécurité parmi les suivantes :
1. Contrôle d'accès (fig. 2, P1).
2. Confidentialité (fig. 2, P2).
3. Intégrité (fig. 2, P3).
4. Authenticité (fig. 2, P4).

Selon une mise en oeuvre de l'invention, la figure 2 présente l'organisation logique d'une condition d'utilisation (fig. 2, CDT) dans laquelle une activité ACTVT doit être utilisée conformément à des protections PROTECT.
Dans toute la suite de la description, le terme CDT sera entendu comme la description formelle des conditions d'utilisations d'une ou plusieurs activités ACTVT pour lesquelles les protections PROTECT sont réclamées.
La protection PROTECT peut indiquer que les quatre propriétés de sécurité doivent être assurées, mais certaines peuvent ne pas être requises. Une condition CDT indique qu'une activité ACTVT est libre d'usage lorsqu'aucune propriété de sécurité n'est requise.
Lorsque l'activité ACTVT est une donnée DATA seule ou une ressource RSRC seule, la condition CDT indique les protections PROTECT que doit apporter le dispositif qui conserve la donnée DATA, ou la ressource RSRC, s'il est soumis à des attaques externes. Une attaque externe est une tentative de pénétration du dispositif, dont la concrétisation dépend de la nature dudit dispositif (exemple : attaque logique sur un protocole de communication pour mettre le dispositif dans un état instable, mesure différentielle de la consommation du dispositif pour extraire des secrets, attaque invasive altérant l'intégrité du dispositif).

Selon une mise en oeuvre de l'invention, la figure 3 présente l'organisation logique d'un matériel ou d'un logiciel communiquant (fig. 3, CNXOBJ), comprenant un dispositif communiquant quelconque (fig. 3, COJ) et un dispositif communiquant certifié (fig. 3, CCOJ).
Dans toute la suite de la description, le terme COJ sera entendu comme un dispositif communiquant quelconque pour lequel il n'est pas nécessaire que son comportement soit garanti. Dans toute la suite de la description, le terme CNXOBJ sera entendu comme un matériel ou un logiciel qui comprend un ou plusieurs dispositifs communiquant certifiés CCOJ, et optionnellement un ou plusieurs dispositifs communiquant quelconques COJ.
Un objet communiquant certifié CNXOBJ peut être concrétisé de multiples façons telles que :
- un routeur, un point d'accès sans fil, un lecteur de badge d'entreprise,
- une base de données en charge d'un fichier client, sans qu'il soit fait d'hypothèse à propos de la taille, du mode de réalisation ou de l'implantation de la base de données,
- une société qui propose de sauvegarder des données en masse à des fins d'archivage est un dispositif communiquant certifié dont les services sont établis contractuellement entre les parties,
- un serveur informatique qui embarque des applications spécialisées dans deux machines virtuelles indépendantes contient deux dispositifs communiquant (les deux machines virtuelles),
- une carte à puce qui contient plusieurs applications est un exemple d'objet interconnecté (la carte à puce) qui contient d'autres dispositifs communiquant (les applications embarquées dans la carte à puce),
- un logiciel spécialisé sur un serveur informatique,
- un système d'exploitation,
- un navigateur internet,
- un smartphone,
- un automate ou un robot industriel
- etc.
Parmi les fonctions apportées par un CNXOBJ, celles qui sont assurées par les dispositifs communiquant certifiés CCOJ qui le composent sont garanties, et par conséquent sont plus coûteuses à réaliser que celles qui sont assurées par des COJ. Avantageusement, les CNXOBJ comprennent des dispositifs communiquant certifiés CCOJ et des dispositifs communiquant quelconques COJ afin d'optimiser les coûts tout en apportant des garanties suffisantes.

Selon une mise en oeuvre de l'invention, la figure 3 présente l'organisation logique d'un dispositif communiquant certifié (fig. 3, CCOJ), accompagné de sa description formelle (fig. 3, FMODEL).
Dans toute la suite de la description, le terme CCOJ sera entendu comme un dispositif communiquant certifié caractérisé en ce que :
- le comportement d'un CCOJ est connu et garanti,
- un CCOJ comprend des activités ACTVT auxquelles il apporte des protections PROTECT en fonction de son paramétrage,
- un CCOJ apporte des protections PROTECT aux biens AST qu'il renferme, contre des attaques externes,
- le comportement d'un CCOJ est décrit formellement dans un modèle (fig. 3, FMODEL) qui comprend, en particulier, les activités ACTVT qu'il propose et les protections PROTECT qu'il possède pour protéger les activités ACTVT et les biens AST qu'il renferme.
Les attaques externes auxquelles un CCOJ peut être soumis dépendent de la nature et de la valeur des biens AST, et de l'objet communiquant CNXOBJ qui comprend le CCOJ. Il peut s'agir notamment d'attaques logiques, d'attaques invasives, ou par des moyens indirects (en anglais : « side channel attacks »). Un dispositif communiquant certifié CCOJ est conçu pour apporter des protections PROTECT en relation avec les attaques auxquelles il peut être soumis. Ainsi, les CCOJ n'offrent pas tous les mêmes niveaux de protection, et ne contrent pas tous les mêmes attaques ; ils sont conçu selon leurs usages et selon l'environnement dans lequel ils sont utilisés. Des dispositifs portables, tels qu'une carte à puce ou un téléphone mobile, peuvent être attaqués avec des méthodes invasives ; à contrario, un routeur réseau installé dans une pièce verrouillée est protégé contre les attaques invasives.
Un dispositif communiquant certifié CCOJ peut être connecté à un ou plusieurs réseaux, dans lesquels s'échangent des données avec d'autres dispositifs communiquant.
Un dispositif communiquant certifié CCOJ est accompagné de gages dont la nature et le nombre sont variables. Ils dépendent notamment du contexte opérationnel, des enjeux de sécurité, et des technologies mises en oeuvre pour opérer les activités ACTVT. Le choix des gages appropriés pour déterminer qu'un dispositif communiquant est un dispositif communiquant certifié CCOJ reste le choix de l'administrateur réseau NM ; il détermine la nature et le niveau des protections qui doivent être apportées dans les réseaux dont il est responsable en fonction des attaques auxquelles ils peuvent être soumis, et des réglementations ou des standards auxquels il est assujetti.

Selon une mise en oeuvre de l'invention, la figure 3 présente l'organisation logique du modèle formel (fig. 3, FMODEL) d'un dispositif communiquant certifié CCOJ.
Dans toute la suite de la description, le terme FMODEL sera entendu comme le modèle formel d'un dispositif communiquant certifié CCOJ caractérisé en ce que :
- Un modèle formel FMODEL décrit fidèlement les comportements garantis de son dispositif communiquant certifié CCOJ.
- Un modèle formel FMODEL décrit les activités ACTVT proposées par le dispositif communiquant certifié CCOJ, ainsi que les protections PROTECT que ledit dispositif peut apporter auxdites activités selon ses paramètres.
- Un modèle formel FMODEL décrit les protections PROTECT que le dispositif communiquant certifié CCOJ apporte aux biens AST qu'il renferme en cas d'attaques externes, en particulier le modèle FMODEL indique la nature et le niveau des attaques externes auxquelles ledit dispositif peut résister.
- Il comprend les descriptions formelles des paramètres du dispositif (fig. 3, PAR et IPAR), qui conditionnent le comportement de son CCOJ, et les protections PROTECT appliquée aux activités ACTVT.
Dans toute la suite de la description, le terme PAR sera entendu comme un paramètre d'un dispositif communiquant certifié CCOJ, caractérisé en ce que l'information contenue dans ledit paramètre est calculée, et est transmise au dispositif communiquant certifié CCOJ pour conditionner son comportement et les protections PROTECT de ses activités.
Dans toute la suite de la description, le terme IPAR sera entendu comme un paramètre d'un dispositif communiquant certifié CCOJ, caractérisé en ce que l'information contenue dans ledit paramètre est utilisée pour calculer les paramètres PAR.

Les paramètres initiaux IPAR sont récupérés et associés au modèle FMODEL pour constituer une description opérationnelle appropriée du CCOJ auquel ils correspondent avant des calculer les paramètres PAR. Lorsque des CCOJ identiques avec le même modèle FMODEL sont utilisés dans les réseaux, les paramètres IPAR qui sont récupérés auprès de chaque CCOJ sont utilisés par l'invention pour connaître le comportement de chaque CCOJ individuellement.

Les paramètres du dispositif sont indiqués dans les modèles formels FMODEL pour que le procédé inventif programme le comportement de chaque CCOJ en lui communiquant les paramètres PAR qu'il a calculé afin d'atteindre les objectifs visés.

La description formelle FMODEL d'un CCOJ comprend la description des activités ACTVT que supporte le CCOJ, ainsi que les protections PROTECT que le CCOJ peut assurer pour lesdites activités.

Un paramètre calculé PAR peut remplacer un paramètre initial IPAR dans le dispositif CCOJ auquel il est transmis (exemple : remplacement des paramètres usine d'un produit, mise à jour des certificats et des clés cryptographiques, etc.).

Avantageusement, des CCOJ différents mais dont les comportements garantis sont proches peuvent faire l'objet de modèles formels FMODEL différents, mais qui utilisent des portions de descriptions formelles identiques issues de librairies informatiques, en particulier lorsque les services apportés par lesdits CCOJ sont standardisés.

Dans les modèles FMODEL, les activités ACTVT et leurs protections PROTECT sont décrites en indiquant le rôle des paramètres dans leurs fonctionnements. En calculant les paramètres PAR adéquats, le procédé inventif conditionne l'emploi des activités ACTVT, pour des utilisateurs USR, selon des protections PROTECT.

Lorsque l'activité ACTVT comprend une donnée DATA seule ou une ressource RSRC seule, la protection PROTECT désigne les propriétés de sécurité que le CCOJ assure pour conserver ladite donnée DATA ou ladite ressource RSRC, et la protéger contre des attaques externes.

Selon une mise en oeuvre de l'invention, la figure 3 présente l'organisation logique des contraintes opérationnelles (fig. 3, OPUSE) qui s'appliquent à un réseau (fig. 3, NET), et qui sont décrites dans un modèle formel (fig. 3, OPMODEL).
La nature des contraintes opérationnelles dépend du réseau de communication et des matériels et logiciels qui y sont reliés, elles comprennent notamment :
- les contraintes de communication liées aux architectures des réseaux (câblage, débit, bande passante),
- la nature éphémère ou persistante d'un canal de communication,
- les services proposés par les dispositifs communiquant et les protocoles qu'ils supportent,
- les préférences du responsable du réseau afin, par exemple, de privilégier les canaux de communications gratuits, de limiter ou d'augmenter les débits dans telle ou telle partie du réseau,
- les flux de communication qui sont mis en oeuvre dans les réseaux,
- les préférences des responsables réseaux NM afin de favoriser les solutions les moins coûteuses (comme en cas d'utilisation de connexions haut débit payantes pour relier différents sites d'une même organisation),
Dans toute la suite de la description, le terme OPUSE sera entendu comme les contraintes opérationnelles qui s'appliquent à un réseau de communication.

Dans toute la suite de la description, le terme OPMODEL sera entendu comme un modèle formel des contraintes opérationnelles OPUSE. Les descriptions formelles OPMODEL contiennent des informations sur les architectures des réseaux, notamment les appareils et logiciels CNXOBJ qui sont connectés et les solutions de communications qui existent entre eux. Les dispositifs communiquant quelconques COJ n'ont pas de caractéristiques garanties, leurs descriptions formelles sont comprises dans les modèles OPMODEL.

Selon une mise en oeuvre de l'invention, la figure 3 présente l'organisation logique des propriétés de sécurités (fig. 3, INCSEC) qui sont apportées inconditionnellement au réseau de communication (fig. 3, NET), et qui sont décrites dans un modèle formel (fig. 3, ISMODEL). Dans toute la suite de la description, le terme INCSEC sera entendu comme les propriétés de sécurités qui sont apportées inconditionnellement dans un réseau de communication.

Selon une mise en oeuvre de l'invention, la figure 3 présente l'organisation logique du model formel (fig. 3, ISMODEL) des propriétés de sécurité INCSEC.
Dans toute la suite de la description, le terme ISMODEL sera entendu comme un modèle formel dans lequel sont décrites une pluralité d'activités ACTVT et une pluralité de dispositifs communiquant certifiés CCOJ, qui bénéficient d'une pluralité de protections PROTECT, qui s'appliquent inconditionnellement à tous les utilisateurs du réseau, quel que soit les modes de réalisation desdites activités et desdites protections.
Un model ISMODEL comprend notamment les protections apportées aux dispositifs CCOJ, et aux activités ACTVT, par l'environnement dans lequel ils opèrent.

Selon une mise en oeuvre de l'invention, la figure 3 présente l'organisation logique d'un réseau (fig. 3, NET), qui comprend une pluralité de dispositifs communiquant certifiés CCOJ et une pluralité dispositifs communiquant quelconques COJ, et dans lequel s'appliquent des contraintes opérationnelles OPUSE, et les propriétés de sécurité INCSEC. Les dispositifs communiquant certifiés CCOJ et les dispositifs communiquant quelconques COJ, sont des portions d'une pluralité d'objets communiquant CNXOBJ symbolisés par le cadre en pointillé (fig. 3, 111).
Dans toute la suite de la description, le terme NET sera entendu un réseau de communication comprenant des dispositifs communiquant CCOJ et COJ, et dans lequel s'appliquent des contraintes opérationnelles OPUSE, et les propriétés de sécurité INCSEC.

Selon une mise en oeuvre de l'invention, la figure 4 présente un objectif (fig. 4, GOAL), ainsi qu'une preuve (fig. 4, PROOF) réclamée afin d'avoir l'assurance que l'objectif indiqué dans ladite preuve a bien été atteint.
Dans toute la suite de la description, le terme GOAL sera entendu comme un objectif.
Dans toute la suite de la description, le terme PROOF sera entendu comme la preuve attestant qu'un objectif GOAL a été atteint.

La description d'un objectif GOAL indique les réseaux NET dans lesquels l'objectif est visé, et comprend les conditions d'utilisations CDT, et les utilisateurs USR auxquels s'appliquent lesdites conditions. Une condition CDT décrit les protections PROTECT à apporter à une activité ACTVT. Les pluralités de données DATA, d'actions ACT, de ressources RSRC et d'utilisations USE sont combinées pour obtenir une pluralité d'activité ACTVT. Avantageusement, la technique des SDO utilisées par l'application IAS qui est présentée dans l'art antérieur peut être utilisée par les dispositifs CCOJ pour adresser les différentes combinaisons de protections PROTECT applicables aux activités ACTVT.

Selon une mise en oeuvre de l'invention, la figure 5 présente un système expert (fig. 5, SYSXPRT) qui communique avec une pluralité de dispositifs communiquant certifiés CCOJ (fig. 5, CCOJ1 à CCOJn).
Le responsable réseau NM indique au système expert SYSXPRT les réseaux NET (fig. 5, NET1... NETn) dans lesquels s'appliquent les objectifs GOAL (fig. 5, GOAL1...GOALn), et réclame des preuves PROOF (fig. 5, PROOF1... PROOFn).
Dans toute la suite de la description, le terme SYSXPRT sera entendu comme un système expert qui calcule des paramètres PAR destinés aux dispositifs communiquant certifiés CCOJ.
Le système expert SYSXPRT récupère les paramètres initiaux IPAR (fig. 5, 1) des dispositifs communiquant certifiés (CCOJ1...CCOJn) connectés aux réseaux (NET1...NETn).
Le système expert SYSXPRT utilise les modèles formels FMODEL, ISMODEL et les paramètres initiaux IPAR pour calculer les paramètres PAR destinés aux dispositifs communiquant certifiés CCOJ afin d'atteindre les objectifs visés (GOAL1...GOALn) et obtenir les preuves (PROOF1... PROOFn) attendues.
Le système expert SYSXPRT transmet (fig. 5, 2) les paramètres PAR qu'il a calculé, aux CCOJ auxquels ils sont destinés.
Pour obtenir les preuves (PROOF1... PROOFn) que les objectifs (GOAL1...GOALn) sont atteints, le système expert SYSXPRT récupère (fig. 5, 3) des sceaux (fig. 5, SEAL) délivrés par les CCOJ. Dans toute la suite de la description, le terme SEAL sera entendu comme un sceau attestant de la réalisation d'une activité ACTVT par un dispositif communiquant certifié CCOJ.

Selon une mise en oeuvre de l'invention, la figure 6 présente un CCOJ conteneur (fig. 6, CCOJ10) qui encapsule d'autres CCOJ (fig. 6, CCOJ101, CCOJ102, CCOJ103) et profite des caractéristiques garanties qu'ils apportent. Le modèle formel (fig. 6, FMODEL10) qui décrit le comportement du CCOJ conteneur (CCOJ10) bénéficie des modèles formels (fig. 6, FMODEL101, FMODEL102, FMODEL103) des CCOJ encapsulés.

Ainsi, un logiciel de signature électronique de documents peut utiliser l'encapsulation en sous-traitant le calcul de la signature à une carte à puce spécifiquement conçue ; il peut alors présenter tout ou partie des caractéristiques certifiées apportées par la carte à puce dans son modèle formel. Les utilisateurs du logiciel ne voient pas la carte à puce, mais uniquement un logiciel de signature électronique capable de délivrer des signatures qualifiées au niveau de sécurité assuré par la carte à puce. L'encapsulation est particulièrement appropriée lorsque des technologies très différentes sont utilisées pour apporter les garantis attendues avec des performances et des coûts adaptés. Les fonctions dont la sécurité doit être maximale sont réalisées par des dispositifs communiquant certifiés garantis par une évaluation sécuritaire indépendante (exemple : en utilisant les Critères Communs comme indiqué dans l'art antérieur), les autres fonctions sont mises en oeuvre à l'aide de technologies moins coûteuses qui apportent moins de garanties.

Selon une mise en oeuvre de l'invention, la figure 7 présente l'organisation logique d'un CCOJ père (fig. 7, CCOJ20) dont le comportement est décrit dans un modèle formel (fig. 7, FMODEL20). Parmi les fonctions (fig. 7, 20) incluses dans le CCOJ père (CCOJ20) certaines d'entre elles (fig. 7, 201, 202, 203) peuvent être utilisées séparément ; elles sont décrites dans d'autres modèles FMODEL (fig. 7, FMODEL201, FMODEL202, FMODEL203) dans lesquels sont reprises les fonctions (201, 202, 203) en raison d'un intérêt marketing, commercial ou technique. Les modèles formels FMODEL201, FMODEL202, FMODEL203 décrivent les comportements des CCOJ fils (fig. 7, CCOJ201, CCOJ202, CCOJ203), sans que lesdits CCOJ fils n'existent indépendamment du dispositif communiquant certifié père CCOJ20. Lorsqu'un utilisateur utilise un des dispositifs communiquant certifiés fils CCOJ201, CCOJ202, CCOJ203, c'est l'objet père CCOJ20 qui est employé sans que l'utilisateur en soit conscient. Cela permet de présenter plusieurs offres de services (20, 201, 202, 203) en utilisant le même dispositif CCOJ20. Avantageusement, un dispositif communiquant certifié CCOJ dont des fonctions ont été bridées avant sa livraison pour des raisons marketing ou commerciales sera accompagné d'un modèle FMODEL qui prend en compte ces limitations volontaires. Un client C1 qui choisi une offre « signature électronique forte » se verra délivrer le modèle formel, les garantis et le CCOJ correspondant à cette offre, un autre client C2 qui choisi l'offre « signature électronique standard » se verra délivrer un autre modèle formel et des garantis inférieures mais le même produit avec une initialisation différente. Ainsi, les CCOJ livrés aux clients C1 et C2 sont identiques mais ils sont initialisés différemment ; seul C1 peut clamer les « signatures fortes » car il est il dispose du CCOJ avec la bonne initialisation.

Avantageusement, une organisation, ou une entreprise, peut utiliser l'invention pour proposer des offres marketings et commerciales différentes en utilisant les mêmes dispositifs communiquant certifiés CCOJ. Elle construit les offres en utilisant des CCOJ capables d'opérer des fonctions avec les plus hauts niveaux de sécurité, et en proposant deux catégories de services: « services avec haute sécurité » et « services avec sécurité standard ». Elle défini des utilisateurs USR1 pour l'offre « services avec haute sécurité » et des utilisateurs USR2 pour l'offre « services avec sécurité standard ». Les utilisateurs USR1 et les utilisateurs USR2 ont accès à des activités ACTVT différentes en fonction des conditions d'utilisations CDT définies lors la description des objectifs GOAL. Les activités ACTVT délivrent des résultats et des sceaux SEAL dont les caractéristiques techniques correspondent aux services de l'utilisateur USR1 ou USR2 (par exemple les calculs cryptographiques utilisés à l'occasion des « services avec haute sécurité » utilisent des clés plus longues et des algorithmes plus résistants que pour les « services avec sécurité standard »).
Par extension, l'organisation peut organiser l'ensemble des activités ACTVT dont disposent les CCOJ de ses réseaux NET pour construire une pluralité d'offres commerciales et marketings selon des critères multiples et variés. Elle peut utiliser l'invention pour contrôler l'accès à toutes les activités et ainsi autoriser ou interdire l'utilisation de fonctions selon les utilisateurs.

Selon une mise en oeuvre de l'invention, la figure 8 présente un objectif GOAL (fig. 8, 73) pour lequel la condition CDT référence une activité ACTVT (fig. 8, ACTVT311), et une preuve PROOF (fig. 8, 74) pour attester que l'objectif GOAL (73) est atteint.
L'activité ACTVT311 est proposée par un CCOJ (fig. 8, CCOJ31) qui emploi deux autres activités ACTVT (fig. 8, ACTVT321, ACTVT322) d'un autre CCOJ (fig. 8, CCOJ32), car le dispositif CCOJ31 ne comprend pas toutes les fonctions nécessaires à l'achèvement de l'activité ACTVT311. L'utilisateur fait appel (fig. 8, 41) à l'activité ACTVT311 du dispositif communiquant CCOJ31. Le dispositif communiquant CCOJ31 fait appel (fig. 8, 51) aux activités ACTVT321 et ACTVT322 du dispositif communiquant CCOJ32, qui communique (fig. 8, 52) les résultats des activités, ainsi que les sceaux SEAL (fig. 8, SEAL321, SEAL322) qui attestent de leurs exécutions.
Le dispositif CCOJ31 vérifie les sceaux SEAL321 et SEAL322, puis continue l'exécution de l'activité ACTVT311, à l'issue de laquelle il délivre les résultats et un sceau SEAL (fig. 8, SEAL311) qui atteste de l'exécution de l'activité ACTVT311.
Le dispositif CCOJ31 est conçu pour délivrer le sceau SEAL311 si toutes les opérations obligatoires à l'achèvement de l'activité ACTVT311 sont achevées, c'est pourquoi il vérifié les sceaux SEAL321 et SEAL322 avant de terminer l'activité ACTVT311. Les dispositifs CCOJ31 et CCOJ32 sont des dispositifs communiquant certifiés CCOJ dont le comportement est programmé en leurs transmettant les paramètres PAR calculés selon l'invention, ce qui garantit que les activités employées réalisent les opérations attendues. Par conséquent, la délivrance (fig. 8, 61) du sceau SEAL311 garantit l'exécution des activités ACTVT311, ACTVT321 et ACTVT322.
La preuve PROOF (74) est apportée en associant le sceau SEAL311 avec d'autres sceaux qui attestent l'authenticité et le paramétrage des dispositifs CCOJ31 et CCOJ32.

Avantageusement, l'objet CCOJ32 peut produire une pluralité de sceaux SEAL supplémentaires à l'occasion de l'exécution des activités ACTVT321 ou ACTVT322 pour attester de l'exécution d'opérations intermédiaires qui correspondent à des activités ACTVT utiles pour d'autres objectifs GOAL. Un CCOJ peut, selon sa programmation, conserver ou délivrer les sceaux SEAL qu'il produit au cours d'une activité ACTVT. Par exemple, une vente sur un site internet nécessite plusieurs opérations, en particulier l'acceptation des conditions de ventes par le client, la validation du paiement en ligne qui est réalisée par un tiers de confiance, et la confirmation de la vente pour le service expédition. Les deux premières activités (validation des conditions de vente et confirmation du paiement) ont un impact juridique ou financier pour lesquels une preuve PROOF obtenue à l'aide de sceaux SEAL supplémentaires est utile. Afin de garantir que la communication desdits sceaux supplémentaires est contrôlée, des activités ACTVT spécifiques peuvent être incluses dans les CCOJ lors de leurs conceptions.

Avantageusement, un sceau SEAL apporte des garanties sur des portions choisies d'une activité ACTVT, alors que les autres portions sont ignorées. Cela permet de simplifier la génération des sceaux SEAL, et d'améliorer les performances des dispositifs communiquant CCOJ. Ainsi, lorsqu'un serveur d'autorisation pour un paiement bancaire est utilisé, la portion critique comprend notamment l'accord ou le refus de l'autorisation, et la génération certificat qui communique la réponse. Il n'est pas utile d'attester de l'exécution de toutes les autres portions d'activité telles que les protocoles de communication, l'analyse syntaxique de la commande, construction du message de réponse, etc.

Selon une autre mise en oeuvre de l'invention, les sceaux SEAL321 et SEAL322 ne sont pas vérifiés par le dispositif communiquant CCOJ31, mais sont délivrés (fig. 8, 62) comme c'est le cas (61) pour le sceau SEAL311. La présence des trois sceaux SEAL311, SEAL321 et SEAL322, atteste que l'activité ACTVT311 s'est déroulée normalement.

La figure 9 présente une pluralité de dispositifs communiquant certifiés CCOJ (fig. 9, CCOJ1...CCOJn) dont les activités ACTVT produisent (fig. 9, 80) une pluralité de sceaux SEAL (fig. 9, SEAL1...SEALm), qui sont combinés (fig. 9, 90) pour construire une pluralité de preuves PROOF (fig. 9, PROOF1... PROOFq) attestant que des objectifs GOAL sont atteints. Un sceau peut-être utilisé pour construire plusieurs preuves.

Les commandes disponibles pour utiliser un objet communiquant CNXOBJ dépendent de sa nature, dans la plupart des cas elles font appels aux dispositifs communiquant COJ et CCOJ qui sont compris dans le CNXOBJ. Les portions qui ne manipulent pas les biens AST sans protection, tel que la couche réseau du modèle OSI, sont opérées par les COJ. Les portions qui ont un rôle actif sur les protections PROTECT des biens AST, sont mises en oeuvre par les activités ACTVT des CCOJ.
Selon une mise en oeuvre de l'invention, un hub Ethernet est un objet communiquant CNXOBJ qui ne comprend que des dispositifs communiquant COJ, car son rôle est répéter les paquets de données qu'il reçoit sur tous ses ports de communication sans les modifier.
Selon une mise en oeuvre de l'invention, un routeur capable d'adresser des communications sur ses ports Ethernet, et sur une interface sans fil WiFi, est un objet communiquant CNXOBJ qui comprend des COJ et des CCOJ. La portion en charge de l'interface WiFi assure la confidentialité des données échangées selon un mode de chiffrement et une clé paramétrés ; ces services sont mis en oeuvre par les CCOJ du routeur, qui chiffrent et déchiffrent à la volée les données échangées avec les périphériques sans fil. Les communications qui utilisent les câbles Ethernet sont assurées par les COJ du routeur.

Les moyens mis en oeuvre pour apporter les gages du comportement d'un dispositif communiquant certifié CCOJ n'impliquent pas systématiquement une expertise technique très poussée (comme pour les certifications Critères Communs citées dans l'art antérieur). Ainsi, on pourra considérer que l'audit des installations informatiques d'une entreprise par un expert qualifié constitue un gage suffisant.
C'est le responsable réseau NM qui détermine s'il dispose des garantis suffisantes pour considérer qu'un dispositif communiquant et sa description formelle FMODEL constituent un dispositif communiquant certifié CCOJ.

Dans de nombreux cas, un dispositif CCOJ doit être personnalisé avant sa mise en service dans les réseaux NET. Des clés cryptographiques ou des mots de passe pour communiquer avec le CCOJ en toute sécurité sont définies, cette opération a lieu dans un environnement maîtrisé (usine de fabrication pour les carte à puce, local des techniciens réseau pour les routeurs, les serveurs web ou les firewalls, etc.).
Avantageusement, les CCOJ comportent des commandes dont les activités ACTVT permettent de personnaliser les biens AST qui contiennent les clés cryptographiques ou les mots de passe initiaux. À cette occasion, d'autres biens AST sont personnalisés pour identifier les clés et les mots de passe du CCOJ, sans dévoiler leurs valeurs secrètes.

Les paramètres initiaux IPAR et les paramètres calculés PAR sont des biens AST, et les dispositifs CCOJ comprennent des activités ACTVT pour assurer leurs protections, notamment lorsqu'ils sont échangés avec le système expert SYSXPRT. Préférablement, les paramètres IPAR et PAR sont, pour le moins, protégés en intégrité et en authenticité afin garantir que les calculs sont réalisés avec les bons paramètres IPAR, et que les dispositifs CCOJ utilisent les paramètres PAR calculés par le système expert.
Les paramètres IPAR et PAR contiennent les informations qui déterminent le comportement et les protections actives des CCOJ. Ils contiennent principalement :
- Les descriptions des utilisateurs USR des CCOJ.
- Les descriptions des protections PROTECT à mettre en oeuvre pour les activités ACTVT en fonction des utilisateurs USR.
- Les descriptions des sceaux SEAL que les activités ACTVT délivrent (en fonction des aptitudes de chaque activité).
- Les paramètres opérationnels des activités ACTVT, afin de personnaliser leurs agissements en fonction des besoins.

Avantageusement, les dispositifs CCOJ mémorise les protections PROTECT établies pour les utiliser à plusieurs reprises. Ainsi lorsqu'un utilisateur présente son code secret à une carte à puce, elle enregistre l'information jusqu'à ce qu'elle soit mise hors tension, ce qui libère l'accès à toutes les activités conditionnées par la présentation dudit code.

Avantageusement, les CCOJ établissent des canaux de communications sécurisés qui apportent les propriétés PROTECT nécessaires pour échanger des informations dans les réseaux. Selon les besoins, les canaux de communication sécurisés peuvent être établis dès l'activation des CCOJ et être maintenus qu'il soit utilisés fréquemment ou pas, ou bien ils peuvent être établis chaque fois que nécessaire puis disparaître après que la commande qui les utilise est achevée. Un dispositif CCOJ assure ses fonctions, tout en protégeant des données DATA et des ressources RSRC, auxquels il apporte les protections PROTECT pour lesquels il est conçu et paramétré. Par exemple, lors d'échanges sécurisés entre deux ordinateurs selon le protocole TCP/IP, la couche réseau IP est en charge du transport des données mais n'a pas de rôle dans leurs protections. C'est la couche application, ou présentation, qui est souvent responsable de la sécurité des communications ; c'est donc dans cette couche de communication que les activités qui de chiffrement et de déchiffrement des données sont mises en oeuvre.

Avantageusement, les CCOJ comprennent une pluralité de protocoles de communications et d'algorithmes cryptographiques qui supportent les quatre propriétés de sécurité des protections PROTECT. Les quatre propriétés de sécurité sont mises en oeuvre et standardisées différemment selon les environnements techniques. Pour une carte à puce qui dispose de peu de mémoire RAM, les données sont échangées par petite quantité, alors qu'un micro ordinateur dispose de suffisamment de mémoire et de puissance pour manipuler un volume important d'information. Dans les deux cas, des canaux de communication sécurisés dans lesquels les données sont chiffrées de bout en bout sont utilisés, mais selon des standards adaptés aux cas d'usages. Certaines technologies sont adaptées à un cas d'usage mais pas à un autre, par exemple une authentification « challenge / réponse » est adaptée pour un calcul effectué par une machine, alors qu'un code secret saisi sur un clavier dédié convient mieux pour authentifier un utilisateur humain.

Avantageusement, les CCOJ proposent des fonctions pour assurer le contrôle d'accès aux activités ACTVT, parmi lesquelles :
- la saisie d'un code secret ou d'un mot de passe,
- la vérification d'une donnée biométrique,
- l'authentification d'un matériel en générant un challenge unique qu'il doit utiliser pour calculer un cryptogramme qui sera vérifié par l'émetteur du challenge (méthode dite « challenge / réponse »),
Les technologies peuvent être enchaînées pour propager une propriété de sécurité entre les CCOJ. Lorsqu'un utilisateur USR humain s'authentifie auprès d'une carte à puce, les activités ACTVT libérées dans ladite carte peuvent exécuter une authentification cryptographique auprès d'un autre CCOJ, ce qui permet de propager la propriété « utilisateur humain » authentifié.

Avantageusement, les CCOJ proposent des fonctions pour assurer la confidentialité des biens AST, parmi lesquelles :
- la création de canaux de communication sécurisés dans lesquels les données sont transmises chiffrées,
- la conservation des biens dans un environnement protégé, comme par exemple le stockage de données dans une enceinte contrôlée (bâtiment surveillé) sans possibilité technique de les récupérer à moins d'avoir un accès physique au support de stockage.

Avantageusement, les CCOJ proposent des fonctions pour assurer l'intégrité des biens AST, parmi lesquelles :
- le calcul et la vérification de code de contrôle d'intégrité pour les données échangées entre dispositifs,
- la duplication de données sauvegardées et le contrôle périodique de leurs intégrités afin de pouvoir corriger des informations altérées.

Avantageusement, les CCOJ proposent des fonctions pour assurer l'authenticité des biens AST, parmi lesquelles :
- le calcul d'une signature électronique vérifiable par un tiers,
- la conservation des biens dans un environnement protégé des menaces identifiées.

Quand une donnée est transmise chiffrées dans un réseau NET, sa confidentialité est assurée par la cryptographie. Lorsqu'elle est reçue, l'activité ACTVT qui la traite déchiffre le cryptogramme et obtient la donnée initiale. La confidentialité de la donnée est alors assurée par le CCOJ qui porte l'activité qui l'a déchiffrée.
Les modèles formels des dispositifs communiquant CCOJ décrivent les propriétés de sécurité disponibles pour assurer les protections PROTECT, et indiquent quelles technologies et quels standards, sont mis en oeuvre pour apporter lesdites protections.

Le format d'une donnée DATA n'est pas limité. Cela peut être un bit, un chiffre, un ensemble complexe d'informations structurées tel qu'une base de données, ou un SDO cité dans l'art antérieur. Les actions ACT qui s'appliquent sur les données DATA dépendent de leurs natures desdites données, et des fonctions qui les utilisent.
La liste non-exhaustive suivante présente des actions ACT possibles :
- Génération des données : tel que le traitement de bases de données pour générer d'autres données utiles à d'autres traitements notamment statistiques, ou un calcul mathématique pour générer une paire de clés RSA.
- Vérification des données : tel qu'un contrôle de cohérence, ou un contrôle d'intégrité.
- Réception des données : telle que la préparation d'un accusé réception.
- Transmission des données : telle que l'émission d'un accusé réception.
- Conservation des données : telle que la sauvegarde des informations sur des supports physiques distincts pour s'assurer qu'une copie est toujours disponible.
- Utilisation des données : tel que le traitement de bases de données à des fins marketings.
- Lecture des données : tel que l'accès à un fichier contenant des informations confidentielles.
- Écriture des données : telle que la création d'un fichier, ou l'ajout d'information dans un autre.
- Modification des données : tel que le remplacement d'une information par une autre.
- Duplication des données : telle que la copie d'un fichier.
- Destruction des données : tel que l'effacement de fichier.
- Authentification utilisateur : telle que la vérification d'un mot de passe sur un PC, la vérification d'un code secret sur une carte à puce, ou l'authentification d'un CCOJ par rapport à un autre CCOJ grâce un la cryptographie.
- Lecture paramètre : telle que la lecture des paramètres IPAR des CCOJ.
- Ecriture paramètre : telle que l'écriture des paramètres calculés PAR dans les CCOJ.
- Mise à jour logicielle : telle que la modification, l'ajout ou la suppression de portions d'objets communiquant CCOJ.
- Contrôle d'intégrité : telle que la vérification périodique de l'intégrité d'une donnée.

Les ressources RSRC sont des services proposés par les CCOJ dont les utilisations USE sont valorisées. Une ressource RSRC peut notamment être :
- du temps d'utilisation d'une fonction,
- la somme de toutes les énergies consommée pour réaliser le service,
- la somme de toutes les dépenses engagées pour délivrer le service,
- la réalisation d'une tâche identifiée,
- la combinaison de plusieurs services, telle que la réalisation d'une tâche identifiée qui est facturée un montant X, plus la somme de toutes les énergies consommées pour réaliser la tâche qui est facturée un montant Y.
Une ressource RSRC fait l'objet d'une utilisation USE qui peut notamment être :
- la comptabilisation de l'usage pour calculer la rétribution à facturer à l'utilisateur USR,
- la limitation de l'usage à un seuil prédéterminé pour les prépaiements et les utilisations forfaitaires avec un seuil maximal,
- le suivi de l'usage à des fins comptables, statistiques ou d'archivage.

Avantageusement, les CCOJ communiquent entre eux et participent ensemble à délivrer des RSRC aux mêmes utilisateurs USR. Ainsi, un CCOJ peut proposer l'utilisation USE d'une ressource RSRC contre une rétribution (argent, « points ressource » utilisables pour accéder à des ressources auprès d'autres CCOJ, etc.). Avantageusement, un serveur internet propose un catalogue des ressources RSRC dans lequel l'indemnité à apporter pour chaque utilisation USE d'une ressource RSRC est indiquée.

Les utilisations USE font l'objet de rétributions qui varient selon des critères divers tels que : le type d'objet CCOJ qui délivrent ou utilise la ressource, le moment ou là ressource est utilisée, le lieu ou la ressource est utilisée, etc. Ainsi, la fourniture d'énergie électrique peut être valorisée différemment selon qu'elle alimente un véhicule automobile ou une habitation. Des études internationales montrent que l'accès à l'énergie sera problématique sur le continent africain vers 2017, notamment en raison du manque d'infrastructures de distribution de l'électricité. Avantageusement, l'invention peut être utilisée pour partager l'énergie stockée dans les batteries des appareils mobiles en la proposant sous forme de ressources RSRC dont les usages USE répondront aux besoins.

Le système expert SYSXPRT utilise les descriptions formelles d'utilisateurs et de systèmes de natures variées pour effectuer des calculs et transmettre des données dans le but d'atteindre les objectifs. Dans toute la suite de la description, le terme ARTEFACT sera entendu comme la description formelle de n'importe quelle personne, appareil, logiciel, ou méthode (telle qu'une méthode d'authentification utilisant la cryptographie), qui est utilisée selon une mise en oeuvre de l'invention. En particulier, le terme ARTEFACT désigne indifféremment un bien AST, une donnée DATA, une action ACT, une ressource RSRC, une utilisation USE, une activité ACTVT, une protection PROTECT, un utilisateur USR, une condition CDT, un objectif GOAL, une preuve PROOF, un sceau SEAL, un modèle FMODEL, un modèle OPMODEL, un modèle ISMODEL, un paramètre initial IPAR, un paramètre calculé PAR.

Les ARTEFACT sont utiles pour décrire les réseaux NET, et pour décrire les objectifs GOAL et les preuves PROOF choisis par les responsables réseaux NM. Ils appartiennent à deux catégories :
1. Les ARTEFACT qui apportent au système expert SYSXPRT les informations garanties nécessaires pour effectuer les opérations permettant d'atteindre les objectifs GOAL et obtenir les preuves PROOF.
2. Les ARTEFACT qui apportent au système expert SYSXPRT les informations non-garanties, notamment celles relative au fonctionnement des réseaux et de leurs composants (protocoles de communication, nature des canaux de communications, caractéristiques non-garanties des CNXOBJ...).
Ce sont les responsables réseaux NM qui déterminent si une description formelle constitue un ARTEFACT garanti, ou un ARTEFACT non-garanti.
Les descriptions formelles suivantes sont des ARTEFACT garantis :
- FMODEL, ISMODEL, GOAL, USR, CDT, PROOF, IPAR, PAR, SEAL, AST, DATA, ACT, RSRC, USE, PROTECT, ACTVT.
La description formelle OPMODEL est un ARTEFACT non-garantis.
Les dispositifs CNXOBJ sont conçus pour que les fonctions dont on veut contrôler l'utilisation soient des activités ACTVT proposées par ses CCOJ, alors que les autres fonctions sont assurées par ses COJ. Par exemple, un lecteur sécurisé d'empreintes digitales est un CNXOBJ qui comprend des COJ pour assurer les communications avec un serveur, afficher des messages sur un écran, etc. et des CCOJ qui lisent les empreintes digitales et les protègent avant qu'elles soient transmises au serveur par les COJ.

Les descriptions formelles des ARTEFACT sont constituées d'expressions impératives et d'expressions déclaratives. Avantageusement, la forme de Backus-Naur est utilisée pour définir un langage commun permettant de décrire les ARTEFACT utiles pour mettre en oeuvre l'invention. Avantageusement, les responsables réseaux NM, les fabricants d'objets communiquant CNXOBJ et de systèmes experts SYSXPRT, les utilisateurs des réseaux, etc., travaillent en communs via des organismes de standardisation (tels que l'ISO, l'ETSI, ou le W3C) pour définir une grammaire formelle utile à la description impérative ou déclarative d'un ARTEFACT.

Avantageusement, cette grammaire commune permet notamment de décrire :
- les conditions à remplir pour accéder à un bien selon l'usage qui en est fait,
- les propriétés qu'il faut garantir sur ce bien (contrôle d'accès, confidentialité, intégrité, authenticité),
- les actions les plus courants lorsque le bien est une donnée (lecture, écriture, effacement d'une donnée, etc.),
- les usages qui correspondent au bien lorsqu'il s'agit d'une ressource (utilisation limité selon un coût ou une consommation d'énergie, comptabilisation de temps machine utilisé sur un matériel partagé, etc.),
- les moyens pour gérer les conditions d'accès, la confidentialité, l'intégrité, l'authenticité des biens AST et des activités ACTVT (codage des droits d'accès, algorithmes cryptographiques, architecture PKI et autorités de certifications, etc.),
- les moyens pour générer et délivrer des sceaux permettant d'établir les preuves (calcul d'une signature électronique, déclenchement d'un signal électrique, etc.),
- les biens d'usages communs dans les échanges électroniques, tels que les transactions de paiements, les factures et leurs composantes, les pièces de comptabilité, les codes et mots de passes utilisés pour authentifier les usagers.

L'usage des expressions déclaratives est particulièrement adapté lorsque le nombre ou la nature exacte de l'ARTEFACT ne sont pas encore connus.

Avantageusement, cette grammaire commune permet de comparer la sécurité intrinsèque des éléments décrits, selon les propriétés de sécurité des protections PROTECT.

Lorsque le responsable réseau NM décrit les utilisateurs USR des réseaux, l'usage d'expressions déclaratives lui permet de spécifier les caractéristiques d'utilisateurs USR dont le nombre peut varier ; typiquement le responsable réseau NM décrit les utilisateurs par leurs rôles au sein de l'organisation (ingénieur en R&D électronique dans le service télécommunication, personnel de l'équipe marketing et stratégique, personnel administratif en comptabilité, manager des ventes, directeur générale, etc.). Le principe est identique lorsque les utilisateurs sont des dispositifs communiquant certifiés CCOJ qui utilisent d'autres CCOJ.
Avantageusement, les ARTEFACT qui décrivent les utilisateurs et les moyens pour contrôler l'accès aux activités permettent l'identification et l'authentification desdits utilisateurs ; lorsque les activités concernent des ressources RSRC, les ARTEFACT comprennent des fonctions de non-répudiation afin que les utilisateurs ne puissent contester l'utilisation desdites ressources.
Avantageusement, un CCOJx1 s'authentifiant auprès d'un autre CCOJx2 peut indiquer l'utilisateur humain USR pour le compte duquel il veut utiliser une activité ACTVT, ainsi le CCOJx2 invoqué peut gérer le contrôle d'accès à ladite activité en fonction du dispositif communiquant CCOJx1 qui émet la requête et en fonction de l'utilisateur humain à l'origine de la demande. Plusieurs solutions peuvent être utilisées pour qu'un CCOJ s'authentifie auprès d'un autre CCOJ :
- les CCOJ sont personnalisés tel que les communications possibles avec d'autres CCOJ sont toutes programmées (gestion centralisée),
- les CCOJ s'informent mutuellement de leurs capacités, en particulier ils s'informent des activités ACTVT qu'ils proposent et des protections PROTECT qu'ils apportent pour lesdites activités (gestion décentralisée).

Les protections PROTECT apportées par un CCOJ assurent le contrôle d'accès, l'intégrité, l'authenticité et la confidentialité des activités ACTVT du CCOJ ; les conditions d'utilisation CDT décrivent les protections PROTECT réclamées pour les activités ACTVT. Chaque propriété de sécurité peut être mise en oeuvre de multiples façons, et selon des niveaux de protection différents. Un contrôle d'accès par mot de passe offre une protection inférieure à une authentification à base de challenge / réponse cryptographiques. Avantageusement, les descriptions formelles utilisent une grammaire commune comprenant des expressions déclaratives, qui permet d'exprimer les niveaux des protections PROTECT, et de comparer les protections apportées avec celles réclamées sans détailler les modes de mise en oeuvre. Cette grammaire commune permet de rédiger les ARTEFACT selon des standards nationaux et internationaux ; le « Référentiel Général de Sécurité » édité par l'ANSSI peut avantageusement être utilisé pour construire cette grammaire commune.

L'utilisation d'expressions impératives est adaptée lorsque la protection PROTECT, ou l'activité ACTVT, est mise en oeuvre selon des moyens techniques spécifiés dans un standard ou un document de référence dont l'utilisation est impérative.

L'utilisation d'expressions déclaratives est adaptée lorsqu'il n'est pas requis d'indiquer les solutions techniques mises en oeuvre. Ainsi, lorsqu'un dispositif communiquant certifié CCOJ est homologué conforme au RGS, son modèle formel FMODEL l'indique grâce à la grammaire formelle commune. Avantageusement, deux dispositifs communiquant CCOJ différents, mais qui sont tous deux homologués RGS, peuvent apporter des protections PROTECT adaptées, et proposer des activités ACTVT comparables, mais selon des mises en oeuvre différentes.

Lorsqu'une activité ACTVT est une donnée DATA seule ou une ressource RSRC seule, les protections PROTECT que le CCOJ apporte à l'activité ACTVT décrivent les capacités du CCOJ à assurer les quatre propriétés de sécurité de base si il est soumis à des attaques externes. Avantageusement, la grammaire commune permet de décrire les attaques auxquelles les CCOJ peuvent être soumis, notamment les attaques logiques, invasives, ou par des moyens indirects (en anglais : « side channel attacks »), et permet également de coter les attaques (par exemple selon une méthode comparable à celle de la « Joint Interpretation Library / Application of Attack Potential to Smartcards »).

Lorsque les certitudes exigées sont très fortes et qu'elles nécessitent l'évaluation des produits connectés aux réseaux par des laboratoires indépendant (exemple : évaluation Critères Communs), les modèles FMODEL et ISMODEL sont signés par lesdits laboratoires avec des outils cryptographiques. Cela permet de vérifier l'authenticité des modèles formels utilisés pour les calculs ; de même, les dispositifs communiquant certifiés CCOJ comprennent des fonctions cryptographiques qui permettent de s'assurer de leurs caractéristiques à distance (marque, modèle, version, etc.).

Avantageusement, les dispositifs communiquant certifiés CCOJ comprennent une pluralité d'activités ACTVT dont le rôle est d'établir et de contrôler les protections PROTECT du CCOJ. Elles permettent notamment les opérations suivantes :
- Authentification d'un utilisateur USR en contrôlant son mot de passe.
- Authentification utilisateur USR par un moyen cryptographique et établissement d'un canal de communication sécurisé assurant la confidentialité, l'intégrité et l'authenticité des informations qui y circulent.
Ces activités sont celles qui sont utilisées en premier car elles libèrent l'utilisation d'autres activités ACTVT du CCOJ en établissant les conditions CDT définies dans les objectifs GOAL.

Les propriétés de sécurités INCSEC qui sont disponibles inconditionnellement dans un réseau de communication apportent des protections PROTECT aux dispositifs CCOJ et aux activités ACTVT. Ainsi, les dispositifs CCOJ installés dans un local verrouillé bénéficient du contrôle d'accès et de l'intégrité dudit local. Lorsqu'une activité ACTVT d'un dispositif CCOJ est opérée depuis une console qui est verrouillée par une serrure, elle bénéficie du contrôle d'accès à ladite console, alors que les autres activités ACTVT du même dispositif qui ne nécessitent pas l'utilisation de ladite console n'en bénéficient pas. Les propriétés de sécurité INCSEC peuvent être mises en oeuvre par des dispositifs communiquant. Ainsi, un canal de communication entre deux établissements d'une organisation, dont les échanges sont protégés en utilisant des dispositifs chiffrant, comprend des propriétés de sécurité INCSEC.

Selon une mise en oeuvre de l'invention, un dispositif communiquant certifié CCOJ comprend des fonctions pour remplacer, modifier ou ajouter des parties du CCOJ ; elles permettent de transmettre des portions de logiciels, et prennent en compte les modifications matérielles du CCOJ (ajout, remplacement ou suppression d'une carte électronique par exemple). Le CCOJ comprend des activités ACTVT spécialisées qui permettent de changer ses logiciels, et de détecter les modifications de portions matérielles qui interviennent dans les activités ACTVT, tout en assurant les protections PROTECT pour lesquels il est conçu et paramétré.
Les portions de CCOJ qui peuvent être modifiées sont ses activités ACTVT, ou des CCOJ encapsulés dans un CCOJ conteneur (tel que le dispositif CCOJ10 présenté figure 6). Lorsqu'une activité ACTVT ou un CCOJ encapsulé est ajouté, supprimé, ou modifié, les caractéristiques du CCOJ changent. Les changements sont répercutés sur les ARTEFACT du CCOJ dans le système expert SYSXPRT, afin que les calculs à venir utilisent des informations correctes. Avantageusement, les CCOJ tracent dans des paramètres IPAR tous les changements d'activités ACTVT, et de CCOJ encapsulés, en utilisant des références et des numéros de version uniques, qui sont récupérés par le système expert SYSXPRT.
Une carte à puce équipée d'une machine virtuelle JavaCard est un CCOJ conteneur, dont les applets sont des CCOJ encapsulés. Avantageusement, les CCOJ encapsulés bénéficient des protections PROTECT de la carte à puce contre des attaques connues (notamment certaines attaques invasives ou indirectes dites « side channel attacks »). Une nouvelle applet peut apporter des activités ACTVT dont bénéficient les autres (en utilisant la technique JavaCard standardisée des « shareable interfaces »).

L'invention met en oeuvre un système expert SYSXPRT qui utilise des ARTEFACT et calcule des paramètres pour les dispositifs communiquant certifiés CCOJ afin d'atteindre les objectifs GOAL, et obtenir des preuves PROOF.
Le système expert SYSXPRT dispose de l'architecture des réseaux NET au moyen des modèles OPMODEL. Les modèles FMODEL et ISMODEL permettent d'identifier les biens AST et les activités ACTVT qui sont supportés par les dispositifs qu'ils décrivent. Avantageusement, les dispositifs communiquant certifiés CCOJ comprennent leur propre modèle FMODEL que le système expert SYSXPRT récupère auprès desdits dispositifs, avec les paramètres IPAR ; afin d'assurer l'authenticité des informations, les clés cryptographiques nécessaires pour authentifier les CCOJ et leurs modèles FMODEL sont communiquées au système expert.
Avantageusement, le système expert présente une vue de l'architecture des réseaux dans laquelle apparaissent les biens AST issus de la récupération des paramètres IPAR, ainsi que les CCOJ, et les CNXOBJ, qui les portent. La vue de l'architecture des réseaux présente également les activités ACTVT des CCOJ et leurs protections PROTECT, ainsi que les utilisateurs USR autorisés (par exemple suite à un précédent paramétrage des CCOJ avec le système expert) ; elle présente pareillement les activités ACTVT et les protections PROTECT qui ne sont pas encore paramétrés (donc qui sont disponibles pour être utilisées à l'avenir). Pour que le responsable réseau puisse utiliser le système expert SYSXPRT sans se préoccuper ni des descriptions formelles, ni des niveaux de protections disponibles ou à réclamer, le système expert lui présente préférablement les réseaux selon les possibilités opérationnelles qu'ils comprennent, et les protections selon des indicateurs standardisés construits à partir de documents de référence (tel que le RGS).

Pour définir les objectifs GOAL et les preuves PROOF, le responsable réseau NM sélectionne la fonction opérationnelle pour laquelle il définit des utilisateurs USR et des protections PROTECT. Le système expert SYSXPRT interagit avec le responsable réseau via une interface graphique de sorte que le responsable réseau n'ait pas à se préoccuper des dispositifs communiquant certifiés CCOJ, ou des activités ACTVT, qui sont utilisés pour répondre à la demande opérationnelle tout en assurant le niveau de protection demandé.

Utilement, le système expert présente les possibilités offertes au responsable réseau en évitant de faire apparaître les détails techniques, et en simplifiant au maximum les choix ; les objectifs GOAL qui découlent des choix du responsable réseau utilisent préférablement des expressions déclaratives, afin d'être indépendants des solutions techniques mises en oeuvre.

Le responsable réseau NM peut également choisir des options qui forcent à utiliser impérativement des technologies plutôt que d'autres, des fonctions ou des matériels plutôt que d'autres, ou pour favoriser les solutions les moins coûteuses (comme en cas d'utilisation de connexions haut débit payantes pour relier différents sites d'une même organisation) ; les objectifs GOAL qui découlent de choix impératifs utilisent les expressions impératives correspondantes.

Le système expert SYSXPRT s'assure que le responsable réseau effectue tous les choix indispensables pour que les objectifs GOAL soient définis. Il s'assure également que le responsable réseau indique les preuves PROOF qu'il souhaite.

Le système expert SYSXPRT, et son interface utilisateur graphique, sont conçus pour fonctionner avec des dispositifs communiquant de natures variés. Afin de s'adapter aux environnements divers, le système expert SYSXPRT est décliné en plusieurs versions pour lesquelles l'interface utilisateur, les interfaces de communications et des fonctions additionnelles sont conçues selon les objets communiquant, leurs dispositifs communiquant, et leurs environnements d'utilisations.

Lorsque les calculs effectués par le système expert SYSXPRT ne permettent pas d'atteindre les objectifs GOAL, ou ne permettent pas de délivrer les preuves PROOF, le système expert SYSXPRT l'indique au responsable réseau NM. Avantageusement, le système expert SYSXPRT indique les raisons qui empêchent d'obtenir le résultat souhaité, et propose de modifier la configuration des réseaux, ou propose de modifier les objectifs. Lorsque les dispositifs communiquant certifiés CCOJ le permettent, le système expert SYSXPRT les met à jour par télétransmission, en changeant leurs activités ACTVT ou leurs CCOJ encapsulés, dans le but apporter les activités ACTVT qui présentent les éléments opérationnels ou sécuritaires manquant. Lorsque des mises à jour de CCOJ par télétransmission ne sont pas possibles, le système expert SYSXPRT indique au responsable réseau NM les impossibilités qu'il a trouvées, ou les modifications à effectuer dans les réseaux NET pour y remédier (par exemple, modifier des matériels). Lorsque les dispositifs communiquant certifiés CCOJ ne disposent pas de la sécurité intrinsèque suffisante pour protéger les biens AST qu'ils doivent manipuler, le système expert SYSXPRT indique les modifications à apporter aux environnements dans lesquels opèrent les objets communiquant CNXOBJ qui englobent lesdits CCOJ (par exemple : « placer le routeur dans un local fermé à clé pour empêcher toute manipulation non autorisée de l'appareil »).

Selon une mise en oeuvre de l'invention, le système expert SYSXPRT comprend plusieurs sous-ensembles spécialisés. Les fonctions les plus sensibles, en particulier les calculs qui utilisent les ARTEFACT garantis, sont confiées à des sous-ensembles de confiance conçus avec l'aide d'un assistant de preuve. Les autres fonctions, telles que les interfaces utilisateurs et les protocoles de communications, sont confiées à d'autres sous-ensembles qui permettent d'utiliser l'invention pour des domaines techniques et des environnements variés. Avantageusement, les sous-ensembles qui constituent le système expert SYSXPRT sont triés selon l'importance des fonctions qu'ils réalisent pour répondre aux attentes du responsable réseau. Les fonctions qui apportent les ARTEFACT (tels que les descriptions FMODEL, ISMODEL et OPMODEL) au système expert SYSXPRT, les fonctions qui assurent les protections PROTECT des ARTEFACT échangés entre le système expert SYSXPRT et les dispositifs communiquant certifiés CCOJ, et les fonctions qui effectuent des calculs, sont les plus importantes pour apporter les garantis demandées. Les fonctions qui assurent les interfaces avec d'autres éléments des réseaux, tels que les progiciels de gestion intégré ou les équipements spécifiques, ou qui n'ont pas d'influence directe sur les garantis apportée par l'invention, sont moins critiques.

Pour effectuer les calculs, le système expert SYSXPRT utilise les ARTEFACT qui décrivent les éléments des réseaux NET, les objectifs GOAL et les preuves PROOF.
Pour connaître le comportement d'un CCOJ, le système expert SYSXRPT doit disposer de sa description FMODEL et de ses paramètres IPAR qu'il récupère auprès des CCOJ. Afin que les paramètres IPAR soit ceux attendus, les communications avec les CCOJ sont protégées.
Le system expert SYSXPRT utilise les modèles ISMODEL pour connaître les activités ACTVT et les dispositifs CCOJ qui bénéficient inconditionnellement de protections PROTECT, et dans quelles conditions (quelles parties des réseaux, quels canaux de communication, quels dispositifs, etc.).
Le system expert SYSXPRT utilise les modèles OPMODEL pour connaître les moyens à sa disposition pour communiquer avec les objets communiquant CNXOBJ (donc avec les CCOJ et COJ), et les contraintes opérationnelles pour les utiliser (notamment les connexions disponibles et les capacités des dispositifs).
Le système expert SYSXPRT calcule les paramètres PAR qui permettent d'atteindre les objectifs GOAL et d'obtenir les preuves PROOF demandées, puis les transmet aux dispositifs communiquant certifiés CCOJ.
Lorsque les propriétés inconditionnelles INCSEC n'apportent par les protections PROTECT requises pour récupérer les paramètres initiaux IPAR ou transmettre les paramètres calculés PAR, le responsable réseau NM intervient en communiquant au système expert SYSXRPT les paramètres initiaux IPAR indispensables (typiquement des clés cryptographiques et des mots de passe) pour que le système expert utilise les activités ACTVT pour obtenir les paramètres initiaux IPAR restants et communiquer les paramètres calculés PAR en assurant les protections PROTECT voulues. Avantageusement, les dispositifs communiquant certifiés CCOJ ont des fonctions spécialement prévues pour leurs mises en service, et pour définir leurs paramètres initiaux IPAR indispensables pour communiquer avec le système expert. Les fonctions à utiliser pour leurs premières initialisations sont libres d'usages, et ce sont les paramètres chargés à cette occasion qui définissent les premières conditions d'accès à respecter. Selon le niveau de sécurité attendu, l'utilisation des fonctions libres d'usages pour initialiser les dispositifs communiquant certifiés a lieu dans un environnement qui apporte les propriétés de sécurité PROTECT requises. Le système expert SYSXPRT utilise les activités ACTVT pour transmettre les paramètres calculés PAR en assurant les protections PROTECT qui garantissent que les bons paramètres PAR sont communiqués aux CCOJ.

Pour établir les preuves PROOF demandées par l'administrateur réseau NM, les dispositifs CCOJ délivrent des seaux SEAL qui garantissent que les activités ACTVT sont réalisées, notamment lorsque les paramètres IPAR et PAR sont échangés avec CCOJ.
Les preuves PROOF que les CCOJ se comportent conformément aux objectifs GOAL sont obtenues en associant les sceaux SEAL avec les modèles FMODEL et ISMODEL.
Les sceaux SEAL peuvent être délivrés par n'importe quelle activité, notamment celles utilisées pour échanger les paramètres PAR et IPAR. En particulier, les CCOJ peuvent délivrer des sceaux SEAL qui garantissent qu'une opération réglementaire a bien été réalisée (telle que l'effacement de données personnelles suite à la demande de la personne concernée). Selon les besoins, un sceau SEAL peut être délivré à l'issue de l'activité ACTVT, ou conservé par le CCOJ pour être utilisée ultérieurement ; ainsi, un sceau généré par une activité peut être conservé dans le CCOJ afin d'être utilisé ou délivré par une autre activité.

Un sceau SEAL généré par un dispositif CCOJ devient une donnée DATA opérée par des activités ACTVT. Cela permet de définir des activités pour communiquer les sceaux entres activités, à d'autres dispositifs communiquant, ou au système expert.

Un sceau SEAL peut se concrétiser par une donnée émise au demandeur de la preuve telle qu'une signature électronique. Avantageusement, les dispositifs communiquant certifiés CCOJ intègrent les algorithmes cryptographiques et les clés nécessaires pour calculer les signatures électroniques et les cryptogrammes qui constitueront les sceaux SEAL.

Avantageusement, les sceaux SEAL sont uniques et contiennent des informations qui permettent à leurs destinataires d'interpréter les garanties qu'ils portent. Par exemple, les sceaux SEAL indiquent pour chaque occurrence d'une activité ACTVT
- le CCOJ qui a délivré le sceau,
- l'utilisateur USR qui a utilisé le dispositif communiquant certifié pour réaliser l'activité ACTVT,
- la donnée DATA, ou la ressource RSRC, utilisée pour opérer l'activité, en particulier lorsqu'elle est pertinente pour comprendre les garanties apportées par le sceau SEAL (par exemple la référence des informations supprimées définitivement dans une base de données, l'horodatage, etc.),

Un sceau SEAL délivré suite à une activité ACTVT constitue une preuve de non-répudiation lorsque ledit sceau est une signature électronique que seul le CCOJ qui à exécuté ladite activité peut calculer.

Lorsque le CCOJ doit piloter un autre appareil (tel qu'un portier qui déclenche une gâche électrique), si c'est un matériel utilisé en milieu industriel, ou s'il s'agit d'une portion d'un ensemble électronique ou électrotechnique de plus grande taille, un sceau SEAL peut se concrétiser par des signaux électriques simples. Ainsi, un CCOJ peut être un automate industriel sécurisé dont les relais électromécanique sont activés par les activités ACTVT qu'il exécute.

Le mode de réalisation du système expert SYSXPRT dépend des assurances attendues par le responsable réseau, et de la nature des réseaux NET. Préférablement, les assurances apportées par le système expert SYSXPRT, celles apportées par les dispositifs communiquant certifiés CCOJ, et celles apportées par les propriétés de sécurité inconditionnelles INCSEC, sont homogènes (si les dispositifs CCOJ sont évalués par un laboratoire indépendant, les dispositifs assurant les propriétés INCSEC, et le système expert SYSXPRT, le sont aussi).
Pour les processus critiques et les installations nécessitant beaucoup de sécurité, l'utilisation d'un assistant de preuve pour concevoir le système expert SYSXPRT, ou les dispositifs communiquant, est recommandée.

Un système expert SYSXPRT dont le comportement est garanti, et qui est accompagné d'un modèle FMODEL, peut être utilisé comme un dispositif communiquant certifié CCOJ.
Dans toute la suite de la description, le terme SYSXPRTCCOJ sera entendu comme un système expert SYSXPRT certifié, accompagné de son modèle FMODEL, qui à les caractéristiques d'un dispositif communiquant certifié CCOJ, et qui peut être utilisé comme tel.
Avantageusement, la grammaire commune utilisée pour les descriptions des ARTEFACT permet de catégoriser les technologies mises en oeuvre par les dispositifs communiquant afin de faciliter la création d'une pluralité de systèmes experts SYSXPRT spécialisés, ou de systèmes experts certifiés SYSXPRTCCOJ spécialisés.
Avantageusement, une organisation qui utilise une pluralité de dispositifs communiquant certifiés CCOJ pour proposer des biens et des services, utilise un système expert certifié SYSXPRTCCOJ, afin que ses clients définissent directement les objectifs GOAL et les preuves PROOF qu'ils attendent pour les services qu'ils requièrent.

Avantageusement, un système expert SYSXPRT spécialisé dans un domaine technologique, peut confier des calculs à un autre système expert lorsqu'il doit adresser des dispositifs communiquant dont les caractéristiques sont hors de son expertise.
Lorsqu'un système expert SYSXPRT est conçu pour adresser un domaine technologique, il est programmé pour interpréter la grammaire formelle dudit domaine. Ainsi, un premier système expert fait appel à un deuxième système expert en lui communiquant les objectifs GOAL, les preuves PROOF, et les descriptions formelles qu'il n'est pas en mesure d'adresser, et le deuxième système expert calcule les paramètres pour le compte du premier.

### DESCRIPTION DÉTAILLÉE DE L'UTILISATION DE L'INVENTION POUR UN CAS USAGE

La figure 10 est une vue schématique d'un réseau informatique dans lequel l'invention est utilisée. Ce réseau comprend deux zones distinctes (fig. 10, 800, 900) pour lesquelles le niveau de protection requis est différent. L'administrateur réseaux NM (fig. 10, 555) est responsable du fonctionnement et de la sécurité des deux zones. La zone recherche 800 comprend le réseau local NET dédié (fig. 10, 801), et la zone commune 900 comprend un autre réseau local NET (fig. 10, 901). Le système expert SYSXPRT (fig. 10, 333) est relié aux deux réseaux locaux 801 et 901. La zone recherche 800 est réservée pour la recherche et les études techniques les plus avancées dont l'importance est stratégique pour l'entreprise, les matériels (fig. 10, 810, 891, 892, 893) y sont interconnectés par le réseau local NET 801 dont les câbles sont inaccessibles (accès physique protégé). Les personnels (fig. 10, 501, 502, 503) font de la recherche et travaillent sur des ordinateurs individuels 891, 892, et 893 qui sont des CCOJ reliés aux deux réseaux locaux 801 et 901.

La zone commune 900 est utilisée par tous les personnels de l'entreprise : les services commerciaux (fig. 10, 515), les personnels administratifs (fig. 10, 525), la recherche (fig. 10, 501, 502, 503). Dans la zone commune 900, les matériels interconnectés (fig. 10, 891, 892, 893, 910, 915, 925) communiquent via le réseau local NET 901 qui est reliée à l'internet (fig. 10, 1000) via un équipement de protection dédié : un firewall (fig. 10, 999).

La zone recherche 800 a un réseau 801 dans lequel les personnels 501, 502, 503, sont des utilisateurs qui utilisent leurs ordinateurs individuels 891, 892, 893, pour effectuer leurs tâches. Les personnels de recherche 501, 502 et 503 utilisent le serveur 810 qui est un CCOJ, pour accéder aux éléments (ressources et données) utiles à leurs travaux (fig. 10, 811). Le réseau 801 apporte des protections inconditionnelles INCSEC (fig. 10, 803) qui sont décrites dans un model ISMODEL. Ses contraintes opérationnelles OPUSE (fig. 10, 802) sont décrites dans un model OPMODEL.

Les ordinateurs 915 et 925 sont des dispositifs communiquant quelconque COJ connectés au réseau 901 de la zone commune.

Le serveur 910 est un dispositif communiquant certifié CCOJ qui permet d'accéder à la base de données clientèle (fig. 10, 911) et au données de l'intranet (fig. 10, 912). Contrairement à celui de la zone de recherche, le réseau 901 de la zone commune n'apporte pas de protection PROTECT ; ses contraintes opérationnelles (fig. 10, 902) sont décrites dans un modèle OPMODEL.

Le système expert SYSXPRT est initialisé avec le modèle ISMODEL des protections INCSEC 803 du réseau 801, et avec les modèles OPMODEL des contraintes opérationnelles OPUSE 802 et 902 des réseaux 801 et 901. Les utilisateurs USR de l'entreprise (501, 502, 503, 515, 525, 555) lui sont communiqué, ainsi que leurs rôles dans l'organisation (recherche, service commercial, services administratif, administrateur réseau). Le système expert SYSXPRT est également initialisé avec les clés et les certificats cryptographiques pour authentifier les dispositifs communiquant CCOJ. Il communique avec les CCOJ pour récupérer leurs paramètres initiaux IPAR et leurs modèles FMODEL.
Les propriétés de sécurité des protections PROTECT sont classées selon quatre niveaux : FORT, MOYEN, FAIBLE, NEANT (i.e. aucune sécurité).

La figure 11 est une présentation logique des descriptions formelles dont dispose le système expert SYSXPRT lorsqu'il est initialisé, et qu'il a récupéré les paramètres initiaux et les modèles FMODEL des dispositifs communiquant certifiés.

Les accolades (fig. 11, 800 et 900) à droite de la figure indiquent la zone (800 ou 900) à laquelle les descriptions formelles sont liées. Les dispositifs communiquant certifiés CCOJ 891, 892 et 893 sont connectés aux deux réseaux 801 et 901, et sont par conséquent liés aux deux zones 800 et 900.

Pour la zone de recherche, le réseau NET (fig. 11, 801) comprend :
- Le modèle OPMODEL de ses contraintes opérationnelles OPUSE (fig. 11, 802)
- Le modèle ISMODEL des protections inconditionnelles INCSEC (fig. 11, 803), dans lequel apparaissent :
   ∘ les activités ACTVT803'1 à ACTVT803'n qui bénéficient des protections PROTECT803'1 à PROTECT803'n. Le niveau des protections apportées est identique quelle que soit l'activité ACTV : contrôle d'accès : FAIBLE ; confidentialité : NEANT ; intégrité : NEANT ; authenticité : NEANT.
- Le modèle FMODEL du serveur (fig. 11, 810), dans lequel apparaissent :
   ∘ Les activités ACTVT810'1 à ACTVT810'n qui bénéficient des protections PROTECT810'1 à PROTECT810'n. Le niveau des protections apportées est identique quelle que soit l'activité ACTV : contrôle d'accès : FORT ; confidentialité : FORT ; intégrité : FORT ; authenticité : FORT.
- Les modèles FMODEL des ordinateurs individuels (fig. 11, 891, 892, 893) connectés aux deux réseaux (801 et 901), dans lesquels apparaissent :
   ∘ Les activités ACTVT89x'1 à ACTVT89x'n qui bénéficient des protections PROTECT89x'1 à PROTECT89x0'n. Le niveau des protections apportées est identique quelle que soit l'activité ACTV : contrôle d'accès : FORT ; confidentialité : FORT ; intégrité : FORT ; authenticité : FORT.

Pour la zone de commune, le réseau NET (fig. 11, 901) comprend :
- Les modèles FMODEL des ordinateurs individuels (fig. 11, 891, 892, 893) connectés aux deux réseaux (801 et 802) comme indiqué ci-dessus.
- Le modèle OPMODEL de ses contraintes opérationnelles OPUSE (fig. 11, 902) qui comprend les descriptions des dispositifs communiquant quelconques COJ (fig. 11, 915, 925).
- Le modèle FMODEL du serveur (fig. 11, 910) dans lequel apparaissent :
   ∘ Les activités ACTVT910'1 à ACTVT910'n qui bénéficient des protections PROTECT910'1 à PROTECT910'n. Le niveau des protections apportées est identique quelle que soit l'activité ACTV : contrôle d'accès : FORT ; confidentialité : MOYEN ; intégrité : MOYEN ; authenticité : MOYEN.
- Le modèle FMODEL du firewall (fig. 11, 999) dans lequel apparaissent :
   o Les activités ACTVT999'1 à ACTVT999'n qui bénéficient des protections PROTECT999'1 à PROTECT999'n. Le niveau des protections apportées est identique quelle que soit l'activité ACTV : contrôle d'accès : FORT ; confidentialité : MOYEN ; intégrité : MOYEN ; authenticité : MOYEN.

Même lorsque plusieurs activités ACTVT bénéficient des mêmes niveaux de protection PROTECT, il peut être nécessaire de les décrire séparément lorsque les solutions mises en oeuvre pour apporter les protections PROTECT sont différentes d'une activité à une autre. Par exemple, la cryptographie symétrique et la cryptographie asymétrique permettent toutes deux de vérifier des authentifications avec un niveau FORT, mais les CCOJ ne disposent pas tous des deux types de cryptographie, ou utilisent des schémas différents.

L'administrateur réseaux NM (555) utilise le système expert SYSXPRT pour indiquer les fonctions et les protections qu'il requiert pour les réseaux 801 et 901. Il interagit avec le système expert grâce à l'interface graphique qui lui présente des vues des installations informatiques de l'entreprise (telle que celle de la figure 10) :
Ses besoins sont les suivants :
   - Il faut protéger les informations sur la clientèle de l'entreprise (fig. 10, 911) qui sont accessibles uniquement aux utilisateurs commerciaux 515. Elles sont soumises aux lois et règlements sur la protection des données à caractère personnel ; elles sont confidentielles, leur intégrité et leur authenticité doivent être assurées. Le niveau de protection minimum pour est MOYEN quelque soit les opérations réalisées.
   - L'intranet de l'entreprise (fig. 10, 912) est accessible par tout le personnel de l'entreprise. Il ne s'agit pas d'informations confidentielles, mais leur authenticité et leur intégrité sont importantes. Les niveaux de protection minimum sont FAIBLE pour le contrôle d'accès et la confidentialité, et MOYEN pour l'intégrité et l'authenticité.
   - L'accès à Internet 1000 passe par un firewall 999 qui limite les communications aux protocoles HTML et aux mails, pour tous les personnels de l'entreprise. Les niveaux de protection minimum sont FAIBLE pour le contrôle d'accès, et MOYEN pour la confidentialité, l'intégrité et l'authenticité.
   - Les informations et les programmes des recherches (fig. 10, 811) sont confidentiels, et ne doivent pas rejoindre la zone commune ; seuls les utilisateurs 501, 502, 503, 555 sont autorisés à y accéder. L'intégrité, la confidentialité et l'authenticité doivent être assurés en permanence.
À partir des besoins du responsable réseau NM et de son utilisation de l'interface graphique, le système expert aide le responsable réseau à définir les objectifs GOAL à atteindre.

Les figures 12 et 13 sont les présentations logiques des objectifs GOAL et des preuves PROOF issues de l'utilisation du système expert SYSXPRT par le responsable réseau 555.
Les accolades (fig. 12, 811 et fig. 13, 911, 912, 999) à droite des figures, indiquent les éléments de la figure 10 auxquels les objectifs GOAL se rapporte.

Pour les données et les ressources 811 utilisées dans la zone recherche, les objectifs GOAL et les preuves PROOF sont les suivants :
- L'objectif GOAL 871comprend deux conditions d'utilisations CDT (fig. 12, 8211 et 8212), il concerne les utilisateurs USR 501, 502, 503 dans le réseau NET (fig. 12, 801) de la zone recherche.
   - La condition d'utilisation 8211 comprend :
      o six activités ACTVT (fig. 12, 83101, 83102, 83103, 83104, 83105, 83106) qui concernent la même donnée DATA (fig. 12, 851) mais selon six actions ACT différentes (fig. 12, 86101, 86102, 86103, 86104, 86105, 86106),
      o une septième activité ACTVT (fig. 12, 83111) qui concerne une ressource RSRC (fig. 12, 852) et son utilisation USE (fig. 12, 86111),
      o une protection PROTECT (fig. 12, 8411).
      Les actions 86101, 86102, 86103, 86104, 86105, 86106 sont respectivement : Lecture, Ecriture, Effacement, Création, Exécution, Copie. L'utilisation 86111 correspond à la première utilisation de la ressource 852.
      Les protections PROTECT (fig. 12, 8411) définie pour la condition d'utilisation 8211 sont : contrôle d'accès : FORT ; confidentialité : FORT ; intégrité : MOYEN ; authenticité : MOYEN.
   - La condition d'utilisation 8212 comprend :
      o une activité ACTVT (fig. 12, 83112) qui concerne une ressource RSRC (fig. 12, 852) et son utilisation USE (fig. 12, 86112),
      o une protection PROTECT (fig. 12, 8412).
      L'utilisation 86112 correspond à la deuxième utilisation de la ressource 852. Les protections PROTECT (fig. 12, 8412) définie pour la condition d'utilisation 8212 sont : contrôle d'accès : FORT ; confidentialité : FORT ; intégrité : FORT ; authenticité : FORT
- Une preuve PROOF (fig. 12, 881) est réclamée pour attester que l'objectif 871 est atteint.
- L'objectif GOAL 872 comprend une condition d'utilisations CDT (fig. 12, 822), il concerne un utilisateur USR (fig. 12, 555) qui est également le responsable réseau NM, et s'applique dans le réseau NET (fig. 12, 801) de la zone recherche.
   - La condition d'utilisation 822 comprend :
      ∘ deux activités ACTVT (fig. 12, 83201, 83202) qui concernent une ressource RSRC (fig. 12, 852) selon deux utilisations USE (fig. 12, 86201, 86202),
      ∘ une protection PROTECT (fig. 12, 842).
      L'utilisation 86201 correspond à la surveillance du temps d'utilisation de la ressource 852.
      L'utilisation 86202 correspond à la surveillance de l'énergie consommée par la ressource 852. Les protections PROTECT (fig. 12, 842) définie pour la condition d'utilisation 822 sont : contrôle d'accès : MOYEN ; confidentialité : MOYEN ; intégrité : MOYEN ; authenticité : MOYEN
- Une preuve PROOF (fig. 12, 882) est réclamée pour attester que l'objectif 872 est atteint.

Pour la base de données clientèle 911, les objectifs GOAL et les preuves PROOF sont les suivants :
- L'objectif GOAL 971 comprend une condition d'utilisations CDT (fig. 13, 921), il concerne les utilisateurs USR commerciaux (fig. 13, 515), et s'applique au réseau 901.
   - La condition d'utilisation 921 comprend :
      o quatre activités ACTVT (fig. 13, 93101, 93102, 93103, 93104) qui concernent des données DATA (fig. 13, 951) selon quatre actions ACT (fig. 13, 96101, 96102, 96103, 96104),
      o une protection PROTECT (fig. 13, 941).
      Les actions 96101, 96102, 96103, 96104 sont respectivement : Lecture, Mise à jour, Création, Effacement.
      Les protections PROTECT (fig. 13, 941) définie pour la condition d'utilisation 921 sont : contrôle d'accès : MOYEN ; confidentialité : MOYEN ; intégrité : MOYEN ; authenticité : MOYEN.
      Les données 951 sont des informations à caractère personnel qui sont soumises à des lois nationales ou internationales. Ces règlements oblige à traiter les données selon certaines règles, et en respectant certaines limites. Le responsable réseau 555 à communiqué cette information au système expert afin qu'il vérifie que les activités sur les données respectent les lois en vigueur.
- Une preuve PROOF (fig. 12, 981) est réclamée pour attester que l'objectif 971 est atteint.

Pour les données de l'intranet 912, les objectifs GOAL et les preuves PROOF sont les suivants :
- L'objectif GOAL 972 comprend une condition d'utilisations CDT (fig. 13, 922), il concerne tous les utilisateurs USR (fig. 13, 501, 502, 503, 515, 525, 555), et s'applique au réseau 901.
   - La condition d'utilisation 922 comprend :
      ∘ deux activités ACTVT (fig. 13, 93201, 93202) qui concernent une donnée DATA (fig. 13, 952) selon deux actions ACT (fig. 13, 96201, 96202),
      ∘ une protection PROTECT (fig. 13, 942).
      Les actions 96201, 96202, sont respectivement : accès aux pages produits, accès aux pages perso.
      Les protections PROTECT (fig. 13, 942) définie pour la condition d'utilisation 922 sont : contrôle d'accès : FAIBLE ; confidentialité : FAIBLE ; intégrité : MOYEN ; authenticité : MOYEN.
- Une preuve PROOF (fig. 12, 982) est réclamée pour attester que l'objectif 972 est atteint.

Pour les données de l'accès internet 999, les objectifs GOAL et les preuves PROOF sont les suivants :
- L'objectif GOAL 979 comprend une condition d'utilisations CDT (fig. 13, 929), il concerne tous les utilisateurs USR (fig. 13, 501, 502, 503, 515, 525, 555), et s'applique au réseau 901.
   - La condition d'utilisation 929 comprend :
      ∘ deux activités ACTVT (fig. 13, 93901, 93902) qui concernent une donnée DATA (fig. 13, 959) selon deux actions ACT (fig. 13, 96901, 96902),
      ∘ une protection PROTECT (fig. 13, 949).
      Les actions 96901, 96902, sont respectivement : Accès HTML, accès mails.
      Les protections PROTECT (fig. 13, 949) définie pour la condition d'utilisation 929 sont : contrôle d'accès : FAIBLE ; confidentialité : MOYEN ; intégrité : MOYEN ; authenticité : MOYEN
- Une preuve PROOF (fig. 12, 989) est réclamée pour attester que l'objectif 979 est atteint.

À partir des ARTEFACT dont il dispose (descriptions des réseaux, des dispositifs communiquant, des objectifs, des preuves, des utilisateurs, etc.), le système expert SYSXPRT est prêt à calculer les paramètres PAR à transmettre aux dispositifs communiquant certifiés CCOJ.
Il s'assure que le serveur de données 910 respecte les lois et les règlements internationaux sur la protection des données à caractère personnelles, en vérifiant que les caractéristiques indispensables sont décrites dans le modèle FMODEL du serveur.
Subséquemment, le système expert SYSXPRT calcul les paramètres PAR et les transmet aux CCOJ.
À réception des paramètres PAR calculés, les CCOJ délivrent des sceaux SEAL qui attestent que lesdits paramètres ont bien été reçu et pris en compte par les dispositifs communiquant certifiés. Le système expert SYSXPRT vérifié les sceaux SEAL qu'il reçoit, et les joints aux modèles FMODEL des CCOJ pour établir les preuves PROOF que les objectifs GOAL sont atteints.

## Revendications

1. Dispositif communiquant certifié (CCOJ) ayant reçu une certification garantissant un comportement du dispositif communiquant certifié, le dispositif communiquant certifié étant apte à être connecté à au moins un réseau de communication (NET), **caractérisé en ce qu'**un modèle formel (FMODEL) est associé au dispositif communiquant certifié, le modèle formel spécifiant des activités (ACTVT) proposées par le dispositif communiquant certifié, des paramètres (IPAR) qui conditionnent le comportement du dispositif communiquant certifié, et des protections (PROTECT) que le dispositif communiquant certifié est apte à apporter aux activités au moins selon ces paramètres, le dispositif communiquant certifié étant apte à recevoir d'un système expert qui dispose du modèle formel, des paramètres (PAR) qui conditionnent le comportement du dispositif communiquant certifié de sorte que le comportement corresponde à des objectifs de sécurité (GOAL) fournis au système expert.

2. Dispositif communiquant certifié (CCOJ) selon la revendication 1, le dispositif communiquant certifié étant apte à délivrer des sceaux (SEAL) attestant que les activités sont effectuées selon les paramètres (PAR) qui conditionnent le comportement du dispositif communiquant certifié de sorte que le comportement correspond aux objectifs de sécurité (GOAL).

3. Dispositif communiquant certifié (CCOJ) selon l'une quelconque des revendications 1 et 2, le dispositif communiquant certifié étant apte à effectuer des premières activités (ACTVT1) qui font appel à des secondes activités (ACTVT2), dans lequel :
o les secondes activités (ACTVT2) délivrent des sceaux que les premières activités (ACTVT1) vérifient, et
o les premières activités (ACTVT1) délivrent des sceaux (SEAL) qui attestent de leurs mises en oeuvre et celles des secondes activités (ACTVT2) conformément aux objectifs de sécurité (GOAL), sans qu'il soit nécessaire de vérifier à nouveau les sceaux délivrés par les secondes activités (ACTVT2).

4. Dispositif communiquant certifié (CCOJ) selon l'une quelconque des revendications 1 à 3, le dispositif communiquant certifié étant apte à effectuer au moins une des opérations suivantes lorsqu'une activité utilise une ressource (RSRC) : une opération de suivi, une opération de limitation, et une opération de comptabilisation, les opérations permettant des rétributions déterminées selon une valeur attribuée à l'utilisation de la ressource.

5. Réseau informatique comprenant :
∘ un ensemble de réseaux de communication (NET),
o un dispositif communiquant certifié (CCOJ) selon l'une quelconque des revendications 1 à 4, le dispositif communiquant certifié étant connecté à l'ensemble de réseaux de communication, et
o un système expert (SYSXPRT) connecté à l'ensemble de réseaux de communication, le système expert étant apte à :
▪ calculer des paramètres (PAR) pour le dispositif communiquant certifié à partir du modèle formel (FMODEL) associé au dispositif communiquant certifié, et des objectifs de sécurité (GOAL), et
▪ envoyer les paramètres calculés au dispositif communiquant certifié.

6. Réseau informatique selon la revendication 5 dans lequel le dispositif communiquant certifié est apte à délivrer des sceaux (SEAL) attestant que les activités sont effectuées selon les paramètres (PAR) qui conditionnent le comportement du dispositif communiquant certifié de sorte que le comportement correspond aux objectifs de sécurité (GOAL).

7. Réseau informatique selon la revendication 6 comprenant une pluralité de dispositifs communiquant certifiés (CCOJ) selon la revendication 2, les dispositifs communiquant certifiés étant connectés à l'ensemble de réseaux de communication, des modèles formels (FMODEL) respectifs étant associés aux dispositifs communiquant certifiés respectifs, le système expert étant apte à établir des preuves (PROOF) attestant que les objectifs de sécurité sont atteints dans le réseau informatique, en associant les modèles formels (FMODEL) respectifs des dispositifs communiquant certifiés respectifs avec des sceaux (SEAL) respectifs délivrés par les dispositifs communiquant certifiés respectifs tel que défini à la revendication 2.

8. Procédé pour sécuriser et garantir le comportement d'un réseau informatique selon l'une quelconque des revendications 5 à 7, le procédé comprenant:
∘ une étape initiale dans laquelle le modèle formel (FMODEL) associé au dispositif communiquant certifié (CCOJ) est mis à la disposition du système expert (SYSXPRT),
∘ une étape de définition d'objectifs dans laquelle le système expert reçoit des objectifs de sécurité (GOAL),
∘ une étape de calcul dans laquelle le système expert calcule des paramètres (PAR) pour le dispositif communiquant certifié à partir du modèle formel associé au dispositif communiquant certifié, et les objectifs de sécurité reçus, et
∘ une étape de paramétrage dans laquelle le système expert envoie les paramètres calculés au dispositif communiquant certifié.

9. Procédé pour sécuriser et garantir le comportement d'un réseau informatique selon la revendication 8, le procédé comprenant une étape de réception de sceaux (SEAL) dans laquelle le système expert (SYSXPRT) reçoit des sceaux (SEAL) délivrés par le dispositif communiquant certifié, les sceaux attestant que les activités sont effectuées selon les paramètres (PAR) qui conditionnent le comportement du dispositif communiquant certifié de sorte que le comportement correspond aux objectifs de sécurité (GOAL).

10. Procédé pour sécuriser et garantir le comportement d'un réseau informatique selon la revendication 9, le réseau informatique comprenant une pluralité de dispositifs communiquant certifiés (CCOJ) selon la revendication 2, les dispositifs communiquant certifiés étant connectés à l'ensemble de réseaux de communication, des modèles formels (FMODEL) respectifs étant associés aux dispositifs communiquant certifiés respectifs, le procédé comprenant une étape d'établissement de preuve (PROOF) dans laquelle le système expert établit des preuves (PROOF) attestant que les objectifs de sécurité sont atteints dans le réseau informatique, en associant les modèles formels (FMODEL) respectifs des dispositifs communiquant certifiés respectifs avec des sceaux (SEAL) respectifs délivrés par les dispositifs communiquant certifiés respectifs tel que défini à la revendication 2.

11. Procédé selon l'une quelconque des revendications 8 à 10, dans lequel, dans l'étape de calcul, le système expert prend en compte des descriptions (ISMODEL, OPMODEL) de l'ensemble de réseaux de communication.

## Patentansprüche

1. Zertifizierte Kommunikationsvorrichtung (CCOJ), die eine Zertifizierung erhalten hat, die ein Verhalten der zertifizierten Kommunikationsvorrichtung garantiert, wobei die zertifizierte Kommunikationsvorrichtung angepasst ist mit mindestens einem Kommunikationsnetzwerk (NET) verbunden zu werden, **dadurch gekennzeichnet, dass** der zertifizierten Kommunikationsvorrichtung ein formales Modell (FMODEL) zugeordnet ist, wobei das formale Modell von der zertifizierten Kommunikationsvorrichtung vorgeschlagene Aktivitäten (ACTVT), das Verhalten der zertifizierten Kommunikationsvorrichtung bedingende Parameter (IPAR), und Schutzmaßnahmen (PROTECT) spezifiziert, die die zertifizierte Kommunikationsvorrichtung in der Lage ist, mindestens gemäß diesen Parametern für die Aktivitäten zu erbringen, wobei die zertifizierte Kommunikationsvorrichtung angepasst ist, von einem Expertensystem, das über das formale Modell verfügt, Parameter (PAR) zu empfangen, die das Verhalten der zertifizierten Kommunikationsvorrichtung derart bedingen, dass das Verhalten dem Expertensystem bereitgestellten Sicherheitszielen (GOAL) entspricht.

2. Zertifizierte Kommunikationsvorrichtung (CCOJ) nach Anspruch 1, wobei die zertifizierte Kommunikationsvorrichtung angepasst ist Siegel (SEAL) auszustellen, die bescheinigen, dass die Aktivitäten gemäß den Parametern (PAR) ausgeführt werden, die das Verhalten der zertifizierten Kommunikationsvorrichtung derart bedingen, dass das Verhalten den Sicherheitszielen (GOAL) entspricht.

3. Zertifizierte Kommunikationsvorrichtung (CCOJ) nach einem der Ansprüche 1 und 2, wobei die zertifizierte Kommunikationsvorrichtung angepasst ist, erste Aktivitäten (ACTVT1) auszuführen, die auf zweite Aktivitäten (ACTVT2) zurückgreifen, wobei:
∘ die zweiten Aktivitäten (ACTVT2) Siegel ausstellen, die die ersten Aktivitäten (ACTVT1) verifizieren, und
∘ die ersten Aktivitäten (ACTVT1) Siegel (SEAL) ausstellen, die ihre Umsetzung und diejenige der zweiten Aktivitäten (ACTVT2) in Übereinstimmung mit den Sicherheitszielen (GOAL) bescheinigen, ohne dass es erforderlich ist, die von den zweiten Aktivitäten (ACTVT2) ausgestellten Siegel erneut zu verifizieren.

4. Zertifizierte Kommunikationsvorrichtung (CCOJ) nach einem der Ansprüche 1 bis 3, wobei die zertifizierte Kommunikationsvorrichtung angepasst ist, mindestens einen der folgenden Vorgänge auszuführen, wenn eine Aktivität eine Ressource (RSRC) verwendet: einen Verfolgungsvorgang, einen Beschränkungsvorgang, und einen Buchungsvorgang, wobei die Vorgänge bestimmte Vergütungen gemäß einem der Verwendung der Ressource zugewiesenen Wert ermöglichen.

5. IT-Netzwerk, umfassend:
∘ eine Einheit von Kommunikationsnetzwerken (NET),
∘ eine zertifizierte Kommunikationsvorrichtung (CCOJ) nach einem der Ansprüche 1 bis 4, wobei die zertifizierte Kommunikationsvorrichtung mit der Einheit von Kommunikationsnetzwerken verbunden ist, und
∘ ein Expertensystem (SYSXPRT), das mit der Einheit von Kommunikationsnetzwerken verbunden ist, wobei das Expertensystem in angepasst ist:
▪ Parameter (PAR) für die zertifizierte Kommunikationsvorrichtung anhand des der zertifizierten Kommunikationsvorrichtung zugeordneten formalen Modells (FMODEL) und der Sicherheitsziele (GOAL) zu berechnen, und
▪ die berechneten Parameter an die zertifizierte Kommunikationsvorrichtung zu senden.

6. IT-Netzwerk nach Anspruch 5, wobei die zertifizierte Kommunikationsvorrichtung angepasst ist, Siegel (SEAL) auszustellen, die bescheinigen, dass die Aktivitäten gemäß den Parametern (PAR) ausgeführt werden, die das Verhalten der zertifizierten Kommunikationsvorrichtung derart bedingen, dass das Verhalten den Sicherheitszielen (GOAL) entspricht.

7. IT-Netzwerk nach Anspruch 6, das eine Vielzahl von zertifizierten Kommunikationsvorrichtungen (CCOJ) nach Anspruch 2 umfasst, wobei die zertifizierten Kommunikationsvorrichtungen mit der Einheit von Kommunikationsnetzwerken verbunden sind, wobei den jeweiligen zertifizierten Kommunikationsvorrichtungen jeweilige formale Modelle (FMODEL) zugeordnet sind, wobei das Expertensystem angepasst ist, Beweise (PROOF) auszufertigen, die bescheinigen, dass die Sicherheitsziele im IT-Netzwerk erreicht werden, indem es die jeweiligen formalen Modelle (FMODEL) der jeweiligen zertifizierten Kommunikationsvorrichtungen jeweiligen Siegeln (SEAL) zuordnet, die wie in Anspruch 2 definiert von den jeweiligen zertifizierten Kommunikationsvorrichtungen ausgestellt werden.

8. Verfahren zum Sichern und Garantieren des Verhaltens eines IT-Netzwerks nach einem der Ansprüche 5 bis 7, wobei das Verfahren umfasst:
∘ einen anfänglichen Schritt, in dem das der zertifizierten Kommunikationsvorrichtung (CCOJ) zugeordnete formale Modell (FMODEL) dem Expertensystem (SYSXPRT) zur Verfügung gestellt wird,
∘ einen Zieldefinitionsschritt, in dem das Expertensystem Sicherheitsziele (GOAL) erhält,
∘ einen Berechnungsschritt, in dem das Expertensystem Parameter (PAR) für die zertifizierte Kommunikationsvorrichtung anhand des der zertifizierten Kommunikationsvorrichtung zugeordneten formalen Modells und der erhaltenen Sicherheitsziele berechnet, und
∘ einen Parametrierschritt, in dem das Expertensystem die berechneten Parameter an die zertifizierte Kommunikationsvorrichtung sendet.

9. Verfahren zum Sichern und Garantieren des Verhaltens eines IT-Netzwerks nach Anspruch 8, wobei das Verfahren einen Siegelbezugsschritt (SEAL) umfasst, in dem das Expertensystem (SYSXPRT) von der zertifizierten Kommunikationsvorrichtung ausgestellte Siegel (SEAL) erhält, wobei die Siegel bescheinigen, dass die Aktivitäten gemäß den Parametern (PAR) ausgeführt werden, die das Verhalten der zertifizierten Kommunikationsvorrichtung derart bedingen, dass das Verhalten den Sicherheitszielen (GOAL) entspricht.

10. Verfahren zum Sichern und Garantieren des Verhaltens eines IT-Netzwerks nach Anspruch 9, wobei das IT-Netzwerk eine Vielzahl von zertifizierten Kommunikationsvorrichtungen (CCOJ) nach Anspruch 2 umfasst, wobei die zertifizierten Kommunikationsvorrichtungen mit der Einheit von Kommunikationsnetzwerken verbunden sind, wobei den jeweiligen zertifizierten Kommunikationsvorrichtungen jeweilige formale Modelle (FMODEL) zugeordnet sind, wobei das Verfahren einen Beweisausfertigungsschritt (PROOF) umfasst, in dem das Expertensystem Beweise (PROOF) ausfertigt, die bescheinigen, dass die Sicherheitsziele im IT-Netzwerk erreicht werden, indem es die jeweiligen formalen Modelle (FMODEL) der jeweiligen zertifizierten Kommunikationsvorrichtungen jeweiligen Siegeln (SEAL) zuordnet, die wie in Anspruch 2 definiert von den jeweiligen zertifizierten Kommunikationsvorrichtungen ausgestellt werden.

11. Verfahren nach einem der Ansprüche 8 bis 10, wobei das Expertensystem im Berechnungsschritt Beschreibungen (ISMODEL, OPMODEL) der Einheit von Kommunikationsnetzwerken berücksichtigt.

## Claims

1. A certified communicating device (CCOJ) having received a certification guaranteeing the behaviour of the certified communicating device, the certified communicating device being adapted of being connected to at least one communication network (NET), **characterised in that** a formal model (FMODEL) is associated with the certified communicating device, the formal model specifying activities (ACTVT) offered by the certified communicating device, parameters (IPAR) that determine the behaviour of the certified communicating device, and protections (PROTECT) that the certified communicating device is capable of providing to the activities at least according to said parameters, the certified communicating device being adapted to receive, from an expert system that has the formal model, parameters (PAR) that determine the behaviour of the certified communicating device such that the behaviour corresponds to security goals (GOAL) provided to the expert system.

2. A certified communicating device (CCOJ) according to claim 1, the certified communicating device being adapted to deliver seals (SEAL) certifying that the activities are performed according to the parameters (PAR) that determine the behaviour of the certified communicating device such that the behaviour corresponds to the security goals (GOAL).

3. A certified communicating device (CCOJ) according to any of claims 1 or 2, the certified communicating device being adapted to perform first activities (ACTVT1) that call on second activities (ACTVT2), wherein:
∘ the second activities (ACTVT2) deliver seals that the first activities (ACTVT1) verify, and
∘ the first activities (ACTVT1) deliver seals (SEAL) that certify the implementation thereof and of that of the second activities (ACTVT2) in accordance with the security goals (GOAL), without it being necessary to recheck the seals delivered by the second activities (ACTVT2).

4. A certified communicating device (CCOJ) according to any of claims 1 to 3, the certified communicating device being adapted to perform at least one of the following operations when an activity uses a resource (RSRC): a monitoring operation, a limiting operation, and a metering operation, the operations allowing remunerations determined according to a value allocated to the use of the resource.

5. A computer network comprising:
∘ a set of communication networks (NET),
∘ a certified communicating device (CCOJ) according to any of claims 1 to 4, the certified communicating device being connected to the set of communication networks, and
∘ an expert system (SYSXPRT) connected to the set of communication networks, the expert system being adapted to:
▪ calculate parameters (PAR) for the certified communicating device based on the formal model (FMODEL) associated with the certified communicating device, and security goals (GOAL), and
▪ send the calculated parameters to the certified communicating device.

6. A computer network according to claim 5, wherein the certified communicating device is adapted tp deliver seals (SEAL) certifying that the activities are performed according to the parameters (PAR) that determine the behaviour of the certified communicating device such that the behaviour corresponds to the security goals (GOAL).

7. A computer network according to claim 6, comprising a plurality of certified communicating devices (CCOJ) according to claim 2, the certified communicating devices being connected to the set of communication networks, respective formal models (FMODEL) being associated with the respective certified communicating devices, the expert system being adapted to establish proofs (PROOF) certifying that the security goals have been reached in the computer network, by associating the respective formal models (FMODEL) of the respective certified communicating devices with respective seals (SEAL) delivered by the respective certified communicating devices as disclosed in claim 2.

8. A method of securing and guaranteeing the behaviour of a computer network according to any of claims 5 to 7, the method comprising:
o an initial step wherein the formal model (FMODEL) associated with the certified communicating device (CCOJ) is made available to the expert system (SYSXPRT),
∘ a goal definition step wherein the expert system receives security goals (GOAL),
∘ a calculation step wherein the expert system calculates parameters (PAR) for the certified communicating device based on the formal model associated with the certified communicating device, and the security goals received, and
∘ a configuration step wherein the expert system sends the calculated parameters to the certified communicating device.

9. A method of securing and guaranteeing the behaviour of a computer network according to claim 8, the method comprising a step of receiving seals (SEAL), wherein the expert system (SYSXPRT) receives seals (SEAL) delivered by the certified communicating device, the seals certifying that the activities are performed according to the parameters (PAR) that determine the behaviour of the certified communicating device such that the behaviour corresponds to the security goals (GOAL).

10. A method of securing and guaranteeing the behaviour of a computer network according to claim 9, the computer network comprising a plurality of certified communicating devices (CCOJ) according to claim 2, the certified communicating devices being connected to the set of communication networks, respective formal models (FMODEL) being associated with the respective certified communicating devices, the method comprising a proof (PROOF) establishment step wherein the expert system establishes proofs (PROOF) certifying that the security goals have been reached in the computer network, by associating the respective formal models (FMODEL) of the respective certified communicating devices with respective seals (SEAL) delivered by the respective certified communicating devices as defined in claim 2.

11. A method according to any of claims 8 to 10 wherein, in the calculation step, the expert system takes into account descriptions (ISMODEL, OPMODEL) of the set of communication networks.
